# EUROPEAN PATENT APPLICATION

(11) **EP 4 586 720 A1**
(43) Date of publication of application: **16.07.2025**
(21) Application number: 22957785.3
(22) Date of filing: 09.09.2022
(51) Int. Cl.: H04W 72/12, H04W 72/04

(54) **TCI STATE DETERMINATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/118112
(87) International publication number: WO 2024/050816

(57) **Abstract**

The present application relates to the field of mobile communications. Disclosed are a TCI state determination method and apparatus, and a device and a storage medium. The method comprises: a terminal receiving first downlink control information (DCI), which is sent by a network device, wherein the first DCI is used for indicating a transmission resource for a physical shared channel; and determining at least one first TCI state corresponding to the physical shared channel. The present application provides a solution in which a transmission resource for a physical shared channel that is indicated by DCI is determined according to the DCI and then a TCI state corresponding to the physical shared channel can be determined, thus ensuring the transmission of the physical shared channel on the basis of the determined TCI state, and improving the flexibility of transmitting the physical shared channel.

## Description

### TECHNICAL FIELD

The present application relates to the field of mobile communications, and in particular to a method, a device, and an apparatus for determining TCI state and a storage medium.

### BACKGROUND

In a mobile communication system, a method is provided for transmitting data between a network device and a terminal through a beam, and the beam indication method is specifically to indicate QCL (Quasi Co-Location) parameters corresponding to different channels through TCI (Transmission Configuration Indication) state.

Currently, a unified TCI state is proposed, which currently includes separate indications for uplink transmission and downlink transmission, that is, downlink TCI state and uplink TCI state, or uplink and downlink joint indication (joint TCI state). That is, if the network device indicates a downlink TCI state for downlink transmission, then the downlink TCI state can be used for the terminal's PDSCH (Physical Downlink Shared Channel) and PDCCH (Physical Downlink Control Channel), as well as part of the CSI-RS (Channel State Information Reference Signal); if the network device indicates an uplink TCI state for uplink transmission, then the uplink TCI state can be used for the terminal's PUSCH (Physical Uplink Shared Channel) and PUCCH (Physical Uplink Control Channel), as well as part of the SRS (Sounding Reference Signal). If the network device indicates a joint TCI state, then the joint TCI state can be used for both uplink and downlink transmission.

However, when DCI (Downlink Control Information) does not contain a TCI indication field, how the network device indicates to the terminal the TCI state corresponding to the physical shared channel scheduled by the DCI becomes an urgent problem to be solved.

### SUMMARY

The embodiments of the present disclosure provide a method, a device, an apparatus for determining a TCI state and a storage medium, ensuring that the physical shared channel is transmitted based on the determined TCI state, and improving the flexibility of transmitting the physical shared channel. The technical solution is as follows:

According to a first aspect of the present disclosure, there is provided a method for determining a TCI state, performed by a terminal, including:
receiving first downlink control information DCI sent by a network device, where the first DCI is configured to indicate a transmission resource of a physical shared channel; and
determining at least one first TCI state corresponding to the physical shared channel.

According to a second aspect of the present disclosure, there is provided a method for determining a TCI state, performed by a network device, including:
sending first DCI to a terminal, where the first DCI is configured to indicate a transmission resource of a physical shared channel, and the terminal is configured to determine at least one first TCI state corresponding to the physical shared channel.

According to a third aspect of the present disclosure, there is provided a device for determining a TCI state, including:
a receiving module, configured to receive first downlink control information DCI sent by a network device, where the first DCI is configured to indicate a transmission resource of a physical shared channel; and
a determining module, configured to determine at least one first TCI state corresponding to the physical shared channel.

According to a fourth aspect of the present disclosure, there is provided a device for determining a TCI state, including:
a sending module, configured to send first DCI to a terminal, where the first DCI is configured to indicate a transmission resource of a physical shared channel, and the terminal is configured to determine at least one first TCI state corresponding to the physical shared channel.

According to a fifth aspect of the present disclosure, there is provided a terminal, including: a processor; a transceiver connected to the processor; and a memory for storing executable instructions for the processor; wherein, the processor is configured to load and execute executable instructions to implement the method for determining the TCI state according to the above aspects.

According to a sixth aspect of the present disclosure, there is provided a network device, including: a processor; a transceiver connected to the processor; and a memory for storing executable instructions for the processor; where the processor is configured to load and execute executable instructions to implement the method for determining the TCI state according to the above aspects.

According to a seventh aspect of the present disclosure, there is provided a communication system, where the communication system includes a terminal and a network device, the terminal is configured to implement the method for determining the TCI state according to the above first aspect, and the network device is configured to implement the method for determining the TCI state according to the above second aspect.

According to an eighth aspect of the present disclosure, there is provided a computer-readable storage medium, where the readable storage medium stores an executable program code, and the executable program code is loaded and executed by the processor to implement the method for determining the TCI state according to the above aspects.

According to a ninth aspect of the present disclosure, there is provided a chip. The chip includes programmable logic circuit and/or computer instructions. When the chip is run on the terminal or the network device, the method for determining the TCI state according to the above aspects is implemented.

According to a tenth aspect of the present disclosure, there is provided a computer program product. When the computer program product is executed by the processor of the terminal or the network device, the terminal or the network device is configured to implement the method for determining the TCI state according to the above aspects.

The present disclosure provides a solution for determining a transmission resource of a physical shared channel indicated by DCI according to the DCI, and then determining a TCI state corresponding to the physical shared channel, thereby ensuring that the physical shared channel is transmitted based on the determined TCI state, and improving the flexibility of transmitting the physical shared channel.

### BRIEF DESCRIPTION OF THE DRAWINGS

In order to more clearly illustrate the technical solutions in the embodiments of the present disclosure, the following will briefly introduce the drawings required for the description of the embodiments. Obviously, the drawings described below are only some embodiments of the present disclosure. For those skilled in the art, other drawings can be obtained based on these drawings without inventive work.
FIG. 1 shows a block diagram of a communication system provided by an example embodiment of the present disclosure;
FIG. 2 shows a block diagram of another communication system provided by an example embodiment of the present disclosure;
FIG. 3 shows a flow chart of a TCI state determination method provided by an example embodiment of the present disclosure;
FIG. 4 shows a flow chart of a TCI state indication method provided by an example embodiment of the present disclosure;
FIG. 5 shows a flow chart of a TCI state determination method provided by an example embodiment of the present disclosure;
FIG. 6 shows a flow chart of a TCI state determination method provided by an example embodiment of the present disclosure;
FIG. 7 shows a flow chart of a TCI state determination method provided by an example embodiment of the present disclosure;
FIG. 8 shows a block diagram of a TCI state determination device provided by an example embodiment of the present disclosure;
FIG. 9 shows a block diagram of a TCI state determination device provided by an example embodiment of the present disclosure;
FIG. 10 shows a schematic diagram of the structure of a communication device provided by an example embodiment of the present disclosure.

### DETAILED DESCRIPTION

In order to make the purpose, technical solution and advantages of the present disclosure clearer, the embodiments of the present disclosure will be further described in detail in conjunction with the accompanying drawings.

Here, the example embodiments will be described in detail, and examples thereof are shown in the accompanying drawings. When the following description refers to the drawings, unless otherwise indicated, the same numbers in different drawings represent the same or similar elements. The implementations described in the following example embodiments do not represent all implementations consistent with the present disclosure. Instead, they are only examples of devices and methods consistent with some aspects of the present disclosure as detailed in the attached claims.

The terms used in the present disclosure are only for the purpose of describing specific embodiments and are not intended to limit the present disclosure. The singular forms "a", "an", "said" and "the" used in the present disclosure and the attached claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "at..." or "when..." or "in response to determining".

It should be noted that the information (including but not limited to user equipment information, user personal information, etc.), data (including but not limited to data for analysis, stored data, displayed data, etc.) and signals involved in the present disclosure are all authorized by the user or fully authorized by all parties, and the collection, use and processing of relevant data need to comply with relevant laws, regulations and standards of relevant countries and regions.

First, the nouns involved in the present disclosure are explained.

TCI state: The TCI state is configured to indicate a QCL parameter. That is, the terminal and network device in the present disclosure will transmit data based on the QCL parameter indicated by the TCI state. QCL type D corresponds to at least one of Rx spatial parameter, UL spatial filter, spatial setting, spatial relation information, etc. QCL Type D is commonly known as a beam. The TCI state is also configured to indicate the path loss reference signal and/or power control parameter information related to the uplink channel/uplink signal.

If the communication frequency band is in frequency range 2, the high-frequency channel attenuates quickly, so a beam-based method is used for data transmission.

Specifically, there are channels and/or reference signals between the network device and the terminal. The channel includes at least one of PDCCH (Physical Downlink Control Channel), PDSCH (Physical Downlink Shared Channel), PUSCH (Physical Uplink Shared Channel) or PUCCH (Physical Uplink Control Channel). The reference signal includes at least one of DMRS (Demodulation Reference Signal), CSI-RS (Channel State Information Reference Signal), SRS (Sounding Reference Signal), PRS (Positioning Reference Signal) or TRS (Tracking Reference Signal). The CSI-RS includes at least one of a CSI-RS for channel state information measurement, a CSI-RS for beam measurement, or a CSI-RS for path loss estimation. The SRS includes at least one of a SRS for codebook-based or non-codebook-based channel state information measurement, a SRS for beam measurement, or a SRS for positioning measurement. The TCI states of the above reference signals are independently indicated. The PDCCH and PUCCH use MAC CE to activate their respective TCI states respectively. The PDSCH and PUSCH use DCI signaling to indicate their respective TCI states respectively.

In addition, the present disclosure proposes to indicate the TCI state of at least one channel and/or signal through a unified TCI state. The unified TCI state currently includes separate indications for uplink transmission and downlink transmission, that is, downlink TCI state and uplink TCI state, or uplink and downlink joint indication joint TCI state. That is, if the network device indicates a downlink TCI state for downlink transmission, then the downlink TCI state can be used for the terminal's PDSCH and PDCCH, as well as a part of the CSI-RS; if the network device indicates an uplink TCI state for uplink transmission, then the uplink TCI state can be used for the terminal's PUSCH and PUCCH, as well as a part of the SRS. If the network device indicates a joint TCI state, then the joint TCI state can be used for both uplink and downlink transmission.

If the network device indicates multiple TCI states, each TCI state can be a joint TCI state, a DL TCI state, or a UL TCI state, then for each physical shared channel, for example, which one or more of the multiple TCI states is used by the PDSCH, and which one or more of the multiple TCI states is used by the PUSCH, also needs to be indicated. In some embodiments, it is proposed to use DCI to indicate the TCI state used by the physical shared channel, where the TCI state used by the physical channel can be indicated by using an existing indication field in the DCI or by introducing a new indication field.

In some embodiments, the DCI includes downlink DCI, the downlink DCI includes DCI format 1_1 or DCI format 1_2, and the TCI state used by PDSCH can be indicated by using an existing indication field in the downlink DCI or introducing a new indication field.

In some embodiments, the DCI also includes uplink DCI, the uplink DCI includes format 0_1 or DCI format 0_2, and the TCI state used by PUSCH can be indicated by using an existing indication field in the uplink DCI or introducing a new indication field.

In some embodiments, the DCI also includes DCI format 1_0 and DCI format 0_0. DCI format 1_0 is a downlink DCI, which can be configured to schedule PDSCH, and DCI format 0_0 is an uplink DCI, which can be configured to schedule PUSCH. Since both DCI format 1_0 and DCI format 0_0 are fallback DCI, it is impossible to use the existing indication field in DCI format 1_0 and DCI format 0_0 or introduce a new indication field to indicate the TCI state used by PDSCH or PUSCH. Therefore, the present disclosure provides a method for determining the TCI state for the transmission of the physical shared channel scheduled by the DCI.

Secondly, the application scenario of the present disclosure is described:

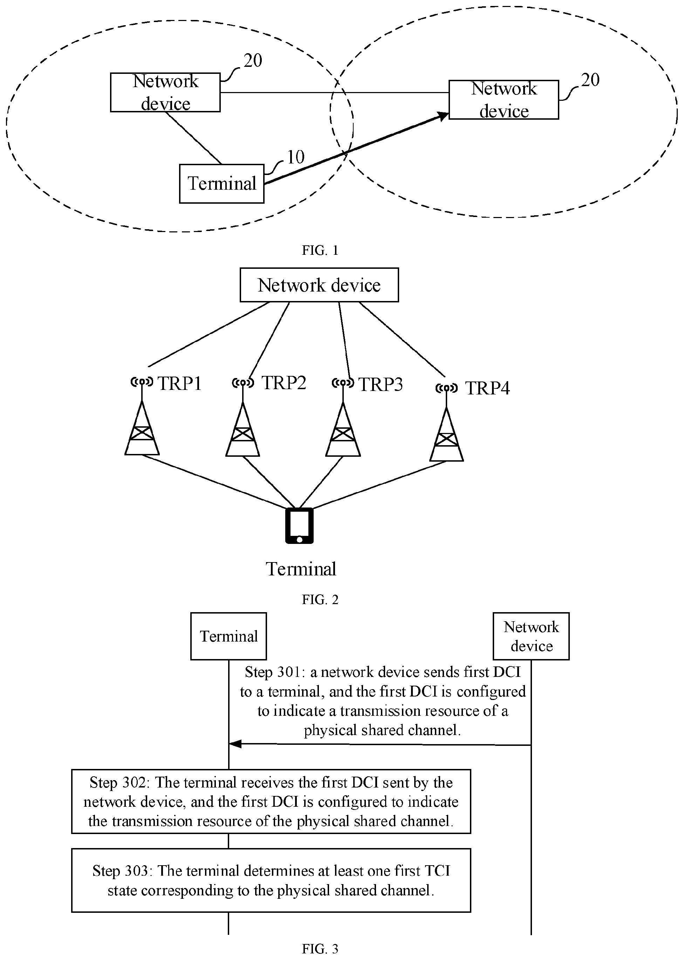

FIG. 1 shows a block diagram of a communication system provided by an example embodiment of the present disclosure, and the communication system may include a terminal 10 and a network device 20.

The number of terminals 10 is usually multiple, and one or more terminals 10 may be distributed in a cell managed by each network device 20. The terminal 10 may include various handheld devices, vehicle-mounted devices, wearable devices, computing devices or other processing devices connected to a wireless modem with wireless communication functions, as well as various forms of user equipment (UE), mobile station (MS), etc. For the convenience of description, in the embodiment of the present disclosure, the above-mentioned devices are collectively referred to as terminals.

The network device 20 is a device deployed in an access network to provide the wireless communication function for the terminal 10. For the convenience of description, in the embodiment of the present disclosure, the above-mentioned devices that provide the wireless communication function for the terminal 10 are collectively referred to as network devices. The network device 20 and the terminal 10 can establish a connection through an air interface, so as to communicate through the connection, including signaling and data interaction. There can be multiple network devices 20, and two adjacent network devices 20 can also communicate in a wired or wireless manner. The terminal 10 can send beam reports between different network devices 20, that is, establish connections with different network devices 20.

The network device 20 may include various forms of macro base stations, micro base stations, relay stations, access points, etc. In systems using different wireless access technologies, the names of devices with network device functions may be different. For example, in 5G NR (New Radio) systems, they are called gNodeB or gNB. With the evolution of communication technology, the name "network device" may change.

In some embodiments, at least two TRPs (Transmission Reception Points) are set on the network device 20; or there are at least two network devices 20, each of which is provided with at least one TRP, that is, at least two network devices 20 are provided with at least two TRPs. That is, at least two TRPs may come from the same cell or different cells.

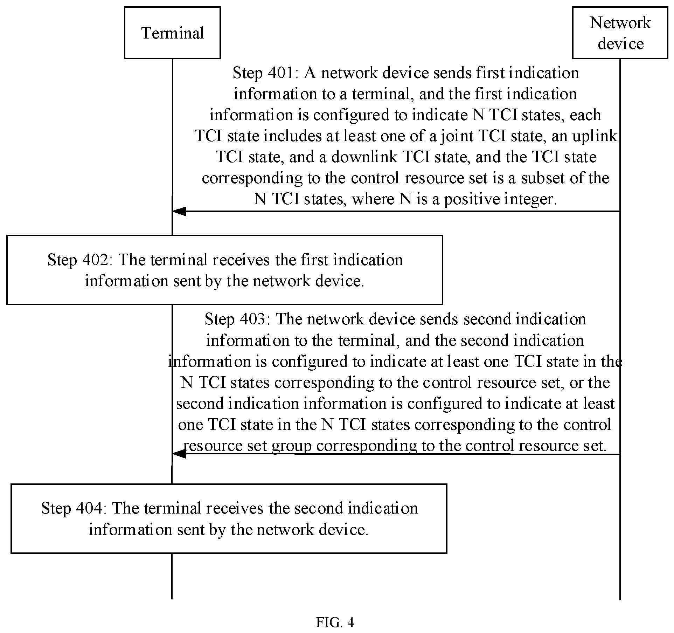

In some embodiments, referring to FIG. 2, 4 TRPs are set on the network device 20, and services can be provided to the terminal 10 through 4 TRPs, then the terminal 10 can perform data transmission based on 4 TRPs.

When data transmission is performed between the network device 20 and the terminal 10 through multiple TRPs, it is called M-TRP transmission, and when data transmission is performed between the network device 20 and the terminal 10 through a single TRP, it is called S-TRP transmission.

In the case of M-TRP, if multiple sets of TCI states are indicated by TCI state indication information, it is still necessary to implement dynamic switching of M-TRP and S-TRP of PDSCH or PUSCH. Therefore, a method is proposed to introduce a new indication field in DCI to indicate that the TCI state used by PDSCH is one or more TCI states indicated by the TCI field.

The "5G NR system" in the embodiment of the present disclosure may also be referred to as a 5G system or an NR system, but those skilled in the art may understand its meaning. The technical solution described in the embodiment of the present disclosure may be applicable to the 5G NR system, and may also be applicable to the subsequent evolution system of the 5G NR system.

FIG. 3 shows a flowchart of a TCI state determination method provided by an example embodiment of the present disclosure, which can be applied to, for example, the terminal and network device shown in FIG. 1, and the method includes at least part of the following contents:
Step 301: a network device sends first DCI to a terminal, and the first DCI is configured to indicate a transmission resource of a physical shared channel.

Step 302: The terminal receives the first DCI sent by the network device, and the first DCI is configured to indicate the transmission resource of the physical shared channel.

The first DCI is configured to indicate the transmission resource of the physical shared channel. That is, the first DCI is configured to schedule the physical shared channel, and then the network device and the terminal can perform data transmission based on the physical shared channel. The transmission resource refers to the resource occupied when data is transmitted between the network device and the terminal through the physical shared channel.

In some embodiments, the transmission resource includes at least one of a time domain resource, a frequency domain resource and other resources, which is not limited in the embodiments of the present disclosure.

In some embodiments, the physical shared channel includes at least one of PDSCH and PUSCH.

For the first DCI configured to indicate the physical shared channel, if the physical shared channel is different, then the first DCI is different.

In some embodiments, if the physical shared channel is a PDSCH, then the first DCI is DCI format 1_0, and if the physical shared channel is a PUSCH, then the first DCI is DCI format 0_0.

Step 303: The terminal determines at least one first TCI state corresponding to the physical shared channel.

In the embodiment of the present disclosure, the terminal determines the transmission resource of the physical shared channel indicated by the first DCI according to the first DCI, and then can determine at least one first TCI state corresponding to the physical shared channel, so as to facilitate data transmission between the terminal and the network device based on the at least one first TCI state that has been determined.

It should be noted that the embodiment of the present disclosure is described by the terminal determining at least one first TCI state corresponding to the physical shared channel. The first DCI configured to indicate the transmission resource of the physical shared channel is not configured to indicate at least one first TCI state. That is, the role of the first DCI is only to indicate the transmission resource, not to indicate the TCI state.

It should be noted that the steps performed by the terminal in the embodiment of the present disclosure can form a new embodiment separately, and the steps performed by the network device can form a new embodiment separately, which is not limited in the embodiment of the present disclosure.

The present disclosure provides a scheme for determining the transmission resource of the physical shared channel indicated by the DCI according to the DCI, and then determining the TCI state corresponding to the physical shared channel, so as to ensure that the physical shared channel is transmitted based on the determined TCI state, and improve the flexibility of transmitting the physical shared channel.

The embodiment shown in FIG. 3 illustrates the determination of the first TCI state by the terminal. The following describes how the terminal determines the first TCI state according to the control resource set.

In some embodiments, the control resource set corresponds to one or more TCI states, and the terminal determines at least one first TCI state based on the one or more TCI states corresponding to the control resource set.

In an embodiment of the present disclosure, the control resource set has a corresponding relationship with the one or more TCI states. The terminal can determine the one or more TCI states corresponding to the control resource set based on the control resource set, and then determine at least one first TCI state from the one or more TCI states corresponding to the control resource set.

In some embodiments, the control resource set includes control resource sets for different purposes. For example, the control resource set is a control resource set for sending the first DCI, or the control resource set is CORESET #0.

That is, the terminal can determine at least one first TCI state according to the TCI state corresponding to the control resource set for sending the first DCI. Alternatively, the terminal may also determine at least one first TCI state based on the TCI state corresponding to CORESET #0.

It should be noted that CORESET #0 in the embodiment of the present disclosure may also be a CORESET for sending the first DCI, or CORESET #0 may not be a CORESET for sending the first DCI, which is not limited in the embodiment of the present disclosure.

The embodiment of the present disclosure describes that the terminal can determine at least one first TCI state based on the TCI state corresponding to the control resource set. For the TCI state corresponding to the control resource set, the number of TCI states corresponding to the control resource set may be different. The following describes how the terminal determines the TCI state corresponding to the control resource set.

In some embodiments, the terminal determines at least one first TCI state based on the TCI state corresponding to the control resource set, including any of the following:
(1) In the case where the control resource set corresponds to a TCI state, at least one first TCI state is a TCI state corresponding to the control resource set.

In the embodiment of the present disclosure, if the control resource set corresponds to a TCI state, the terminal directly determines the TCI state as the first TCI state.

For example, if the control resource set configured to send the first DCI corresponds to a TCI state, the terminal directly determines the TCI state as the first TCI state. For another example, if CORESET #0 corresponds to a TCI state, the terminal directly determines the TCI state as the first TCI state.

(2) In the case where the control resource set corresponds to multiple TCI states, at least one first TCI state is one of the multiple TCI states corresponding to the control resource set.

In the embodiment of the present disclosure, the control resource set corresponds to multiple TCI states, and the terminal can select a TCI state from the multiple TCI states to be the first TCI state. That is, the terminal can select a TCI state from the multiple TCI states according to the default rule, and then determine the selected TCI state as the first TCI state.

For example, if the control resource set configured to send the first DCI corresponds to multiple TCI states, then the terminal can select a TCI state from the multiple TCI states corresponding to the control resource set configured to send the first DCI to be the first TCI state. For another example, if CORESET #0 corresponds to multiple TCI states, then the terminal may select one TCI state from the multiple TCI states corresponding to CORESET #0 and determine it as the first TCI state.

In some embodiments, if the multiple TCI states corresponding to the control resource set include TCI state #1 and TCI state #2, the terminal may determine the first one of TCI states (TCI state #1) as the first TCI state, or the terminal may determine the second one of TCI states (TCI state #2) as the first TCI state.

(3) In the case where the control resource set corresponds to multiple TCI states, at least one first TCI state is multiple TCI states corresponding to the control resource set.

In the embodiment of the present disclosure, if the control resource set corresponds to multiple TCI states, the terminal may determine all the multiple TCI states as the first TCI states. That is, the terminal may determine the multiple TCI states corresponding to the control resource set as the first TCI states.

For example, if the control resource set configured to send the first DCI corresponds to multiple TCI states, then the terminal may determine the multiple TCI states corresponding to the control resource set configured to send the first DCI as the first TCI states. For another example, if CORESET #0 corresponds to multiple TCI states, then the terminal can determine the multiple TCI states corresponding to CORESET #0 as the first TCI states.

In some embodiments, if the multiple TCI states corresponding to the control resource set include TCI state #1 and TCI state #2, the terminal can determine both of the first one of TCI states (TCI state #1) and the second one of TCI states (TCI state #2) as the first TCI states.

It should be noted that the embodiment of the present disclosure is described by taking the TCI state as an example. In another embodiment, when the physical shared channel is PDSCH, the TCI state determined based on the control resource set includes a joint TCI state and/or a downlink TCI state. That is, the terminal can determine the TCI state corresponding to the physical shared channel according to the joint TCI state and/or downlink TCI state corresponding to the control resource set. In another embodiment, when the physical shared channel is PUSCH, the TCI state determined based on the control resource set includes a joint TCI state and/or an uplink TCI state. That is, the terminal can determine the TCI state corresponding to the physical shared channel based on the joint TCI state and/or the uplink TCI state corresponding to the control resource set.

In the solution provided in the embodiment of the present disclosure, the terminal can determine the TCI state corresponding to the physical shared channel based on the TCI state corresponding to the control resource set, thereby ensuring that the physical shared channel is transmitted based on the determined TCI state, and improving the flexibility of transmitting the physical shared channel.

The above embodiment describes how the terminal determines the first TCI state based on the TCI state corresponding to the control resource set. Next, how the terminal determines the TCI state corresponding to the control resource set will be described. FIG. 4 shows a flowchart of a TCI state indication method provided by an example embodiment of the present disclosure, which can be applied to, for example, the terminal and network device shown in FIG. 1, and the method includes at least part of the following contents:
Step 401: A network device sends first indication information to a terminal, and the first indication information is configured to indicate N TCI states, each TCI state includes at least one of a joint TCI state, an uplink TCI state, and a downlink TCI state, and the TCI state corresponding to the control resource set is a subset of the N TCI states, where N is a positive integer.

Step 402: The terminal receives the first indication information sent by the network device.

In the embodiment of the present disclosure, the network device can inform the terminal of N TCI states through the indication information, and subsequently, the terminal can determine the TCI state corresponding to the control resource set based on the N TCI states, where N is a positive integer.

The TCI state includes at least one of a joint TCI state, an uplink TCI state and a downlink TCI state. That is, the N TCI states may include N joint TCI states, N uplink TCI states, N downlink TCI states, N downlink TCI states and uplink TCI states, or may also include N other TCI states, which is not limited in the embodiments of the present disclosure.

In some embodiments, the N TCI states include a QCL indication for at least one of PDCCH, PDSCH, PUCCH, PUSCH, CSI-RS and SRS. That is, the N TCI states in the embodiments of the present disclosure can be used for the QCL indication of at least one channel and/or at least one signal mentioned above.

In some embodiments, the first indication information is carried in a third medium access control control element (MAC CE), and the third MAC CE is configured to indicate the N TCI states.

In some embodiments, the third MAC CE is configured to indicate the N TCI states corresponding to a code point in the TCI field of DCI (Downlink Control Information, DCI). That is, only the third MAC CE is sent but the DCI is not sent, and the N TCI states indicated in the third MAC CE only correspond to a code point in the TCI field of the DCI. Therefore, the base station does not need to send additional DCI to the terminal to indicate the code point, thereby saving signaling overhead.

In some embodiments, the first indication information is carried in a fourth MAC CE and second DCI. The fourth MAC CE is configured to indicate the N TCI states respectively corresponding to at least two code points in the TCI field of the second DCI, and the second DCI is configured to indicate one code point in the at least two code points. That is, the fourth MAC CE and the second DCI are configured to indicate the second indication information at the same time. The fourth MAC CE indicates the N TCI states respectively corresponding to at least two code points in the TCI field of the second DCI. The second DCI is configured to indicate the code point, and then the N TCI states corresponding to the code point are obtained by querying the fourth MAC CE. At this time, the fourth MAC CE can indicate multiple sets of code point configurations, and each set of code point configurations corresponds to N TCI states. It should be noted that, each code point corresponds to the N TCI states, and the N value corresponding to each code point can be the same or different.

In some embodiments, the terminal can determine that the TCI state corresponding to the control resource set actually refers to multiplexing a part or all of the N TCI states based on the N TCI states configured by the network device.

In some embodiments, the N TCI states are called indicated TCI states, which indicates that the N TCI states can be applied to multiple channels/signals, and are not limited to a single channel/signal. For example, some or all of the N indicated TCI states can be used for the transmission of at least two of PDCCH, PDSCH, PUCCH, PUSCH, CSI-RS and SRS.

Step 403: The network device sends second indication information to the terminal, and the second indication information is configured to indicate at least one TCI state in the N TCI states corresponding to the control resource set, or the second indication information is configured to indicate at least one TCI state in the N TCI states corresponding to the control resource set group corresponding to the control resource set.

The N TCI states include multiple joint TCI states and/or downlink TCI states.

Step 404: The terminal receives the second indication information sent by the network device.

In an embodiment of the present disclosure, after the terminal determines the N TCI states indicated by the network device, the network device can configure the corresponding TCI state for the control resource set of the terminal through the second indication information, and the configured TCI state corresponding to the control resource set belongs to the N TCI states.

The second indication information can indicate the TCI state corresponding to the control resource set in two ways.

The second indication information is configured to indicate at least one TCI state of the N TCI states corresponding to the control resource set. For example, the N TCI states include TCI state #1, TCI state #2, TCI state #3 and TCI state #4, and the second indication information can indicate that TCI state #1 and TCI state #2 are the TCI states corresponding to the control resource set. Alternatively, the second indication information can indicate that TCI state #1 and TCI state #4 are the TCI states corresponding to the control resource set. For another example, the N TCI states include TCI state #1 and TCI state #2, and the second indication information can indicate that TCI state #1 is the TCI state corresponding to the control resource set.

Alternatively, the second indication information is configured to indicate that the control resource set group corresponding to the control resource set corresponds to at least one TCI state among the N TCI states. For example, the N TCI states include TCI state #1, TCI state #2, TCI state #3 and TCI state #4, and the second indication information may indicate that TCI state #1 and TCI state #2 are TCI states corresponding to control resource set group #1, and the control resource set group corresponding to the control resource set is control resource set group #1, so the TCI state corresponding to the control resource set is TCI state #1 and TCI state #2. Alternatively, the second indication information may indicate that TCI state #1 and TCI state #4 are TCI states corresponding to the control resource set group corresponding to the control resource set. For another example, the N TCI states include TCI state #1 and TCI state #2, and the second indication information may indicate that TCI state #1 is TCI state corresponding to the control resource set group #1, and the control resource set group corresponding to the control resource set is the control resource set group #1, so the TCI state corresponding to the control resource set is TCI state #1.

In some embodiments, the correspondence between the control resource set and the control resource set group is configured by RRC and/or MAC CE. That is, the network device configures the correspondence between the control resource set and the control resource set group for the terminal through RRC and/or MAC CE.

In some embodiments, the second indication information is indicated by at least one of RRC and the first MAC CE.

It should be noted that the embodiment of the present disclosure is only described by taking steps 403 to 404 as an example. In another embodiment, steps 403 to 404 may not be performed, and the terminal can determine the TCI state corresponding to the control resource set from N TCI states by default rules.

In the embodiment of the present disclosure, the N TCI states include multiple joint TCI states and/or downlink TCI states; the scheme for the terminal to determine the TCI state of the control resource set includes any of the following:
The first scheme: at least one TCI state among the N TCI states is determined as the TCI state corresponding to the control resource set by default.

In the embodiment of the present disclosure, after the terminal determines the N TCI states indicated by the network device, the terminal can determine the TCI state corresponding to the control resource set according to the default rule, and the TCI state corresponding to the control resource set belongs to the N TCI states.

The terminal determines at least one TCI state of the N TCI states as the TCI state corresponding to the control resource set by default. For example, the N TCI states include TCI state #1, TCI state #2, TCI state #3 and TCI state #4, and TCI state #1 and TCI state #2 are determined as the TCI states corresponding to the control resource set. Or, TCI state #1 and TCI state #4 are determined as the TCI states corresponding to the control resource set. For another example, the N TCI states include TCI state #1 and TCI state #2, and TCI state #1 is determined as the TCI state corresponding to the control resource set.

The second scheme: at least one TCI state among the N TCI states is determined as the TCI state corresponding to the control resource set group corresponding to the control resource set by default.

The terminal determines at least one TCI state among the N TCI states as the TCI state corresponding to the control resource set group corresponding to the control resource set by default. For example, the N TCI states include TCI state #1, TCI state #2, TCI state #3 and TCI state #4, and TCI state #1 and TCI state #2 are determined as the TCI states corresponding to the control resource set group #1, and the control resource set group corresponding to the control resource set is control resource set group #1, so the TCI state corresponding to the control resource set is TCI state #1 and TCI state #2. Alternatively, TCI state #1 and TCI state #4 are determined as the TCI states corresponding to the control resource set group corresponding to the control resource set. For another example, the N TCI states include TCI state #1 and TCI state #2, and TCI state #1 is determined as the TCI state corresponding to the control resource set group #1, and the control resource set group corresponding to the control resource set is control resource set group #1, so the TCI state corresponding to the control resource set is TCI state #1.

In some embodiments, the correspondence between the control resource set and the control resource set group is configured by RRC and/or MAC CE. That is, the network device configures the correspondence between the control resource set and the control resource set group for the terminal through RRC and/or MAC CE.

In the solution provided in the embodiment of the present disclosure, the network device configures N TCI states for the terminal, and the terminal determines the TCI state corresponding to the control resource set based on the configured N TCI states, which expands the way in which the terminal determines the TCI state corresponding to the control resource set, thereby ensuring that the physical shared channel is transmitted based on the determined TCI state, and improving the flexibility of transmitting the physical shared channel.

It should be noted that the embodiment of the present disclosure is only described by taking the example of the terminal determining the TCI state corresponding to the control resource set based on the N TCI states configured by the network device. In another embodiment, the network device can directly configure the TCI state corresponding to the control resource set for the terminal, without having to determine the TCI state corresponding to the control resource set based on the N TCI states.

In an embodiment of the present disclosure, the network device sends a second MAC CE to the terminal, and the second MAC CE is configured to indicate one or more TCI states corresponding to the control resource set. The terminal receives the second MAC CE sent by the network device, and can determine one or more TCI states corresponding to the control resource set indicated by the second MAC CE. The terminal can subsequently determine at least one first TCI state according to the TCI state corresponding to the control resource set.

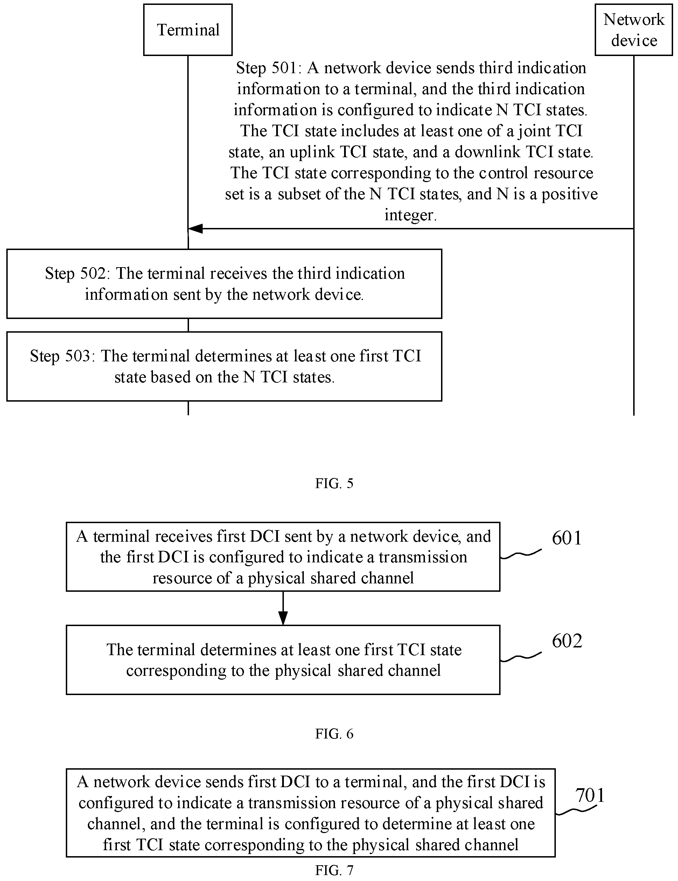

The embodiment shown in FIG. 3 illustrates the determination of the first TCI state by the terminal. The following describes how the terminal determines the first TCI state according to the N TCI states configured by the network device. FIG. 5 shows a flowchart of a TCI state determination method provided by an example embodiment of the present disclosure, which can be applied to, for example, the terminal and the network device shown in FIG. 1. The method includes at least part of the following contents:
Step 501: A network device sends third indication information to a terminal, and the third indication information is configured to indicate N TCI states. The TCI state includes at least one of a joint TCI state, an uplink TCI state, and a downlink TCI state. The TCI state corresponding to the control resource set is a subset of the N TCI states, and N is a positive integer.
Step 502: The terminal receives the third indication information sent by the network device.

In an embodiment of the present disclosure, the network device may inform the terminal of N TCI states through indication information, and the terminal may subsequently determine at least one first TCI state corresponding to the physical shared channel based on the N TCI states, where N is a positive integer.

The TCI state includes at least one of a joint TCI state, an uplink TCI state, and a downlink TCI state. That is, the N TCI states may include N joint TCI states, N uplink TCI states, N downlink TCI states, N downlink TCI states and uplink TCI states, or may also include N other TCI states, which is not limited in the embodiment of the present disclosure.

In some embodiments, the N TCI states include a QCL indication for at least one of PDCCH, PDSCH, PUCCH, PUSCH, CSI-RS, and SRS. That is to say, the N TCI states in the embodiment of the present disclosure can be used for the QCL indication of at least one channel and/or at least one signal mentioned above.

In some embodiments, the third indication information is carried in a third medium access control control element (MAC CE), and the third MAC CE is configured to indicate the N TCI states.

In some embodiments, the third MAC CE is configured to indicate the N TCI states corresponding to a code point in the TCI field of DCI (Downlink Control Information, DCI). That is, only the third MAC CE is sent but the DCI is not sent, and the N TCI states indicated in the third MAC CE only correspond to a code point in the TCI field of the DCI. Therefore, the base station does not need to send additional DCI to the terminal to indicate the code point, thereby saving signaling overhead.

In some embodiments, the first indication information is carried in a fourth MAC CE and second DCI. The fourth MAC CE is configured to indicate the N TCI states respectively corresponding to at least two code points in the TCI field of the second DCI, and the second DCI is configured to indicate one code point of the at least two code points. That is, the fourth MAC CE and the second DCI are configured to indicate the second indication information at the same time. The fourth MAC CE indicates the N TCI states respectively corresponding to at least two code points in the TCI field of the second DCI. The second DCI is configured to indicate the code point, and then the N TCI states corresponding to the code point are obtained by querying the fourth MAC CE. At this time, the fourth MAC CE can indicate multiple sets of code point configurations, and each set of code point configurations corresponds to N TCI states. It should be noted that, each code point corresponds to the N TCI states, and the N value corresponding to each code point can be the same or different.

In some embodiments, the terminal can determine that the TCI state corresponding to the control resource set actually refers to multiplexing a part or all of the N TCI states based on the N TCI states configured by the network device.

In some embodiments, the N TCI states are called indicated TCI states, which indicates that the N TCI states can be applied to multiple channels/signals, and are not limited to a single channel/signal. For example, some or all of the N indicated TCI states can be used for the transmission of at least two of PDCCH, PDSCH, PUCCH, PUSCH, CSI-RS and SRS.

Step 503: The terminal determines at least one first TCI state based on the N TCI states.

In an embodiment of the present disclosure, the terminal determines N TCI states configured by the network device, and the terminal can select at least one TCI state from the N TCI states as the first TCI state.

In some embodiments, the terminal determines at least one TCI state among the N TCI states as at least one first TCI state by default.

In an embodiment of the present disclosure, the terminal determines at least one TCI state among N TCI states as at least one first TCI state by default. For example, N TCI states include TCI state #1, TCI state #2, TCI state #3, and TCI state #4, and TCI state #1 and TCI state #2 are determined as the first TCI states. Or, TCI state #1 and TCI state #4 are determined as the first TCI states. For another example, N TCI states include TCI state #1 and TCI state #2, and TCI state #1 is determined as the first TCI state.

In some embodiments, when the physical shared channel is PDSCH, the TCI state of the joint TCI state or DL TCI state in the N TCI states includes TCI state #1 and TCI state #2, then the terminal can determine the first one of TCI states, that is, TCI state #1, or the second one of TCI states, that is, TCI state #2, or two TCI states, that is, TCI state #1 and TCI state #2, as the first TCI state by default.

In some embodiments, when the physical shared channel is PUSCH, the TCI state of the joint TCI state or the UL TCI state in the N TCI states includes TCI state #1 and TCI state #3, then the terminal can determine the first one of TCI states, that is, TCI state #1, or the second one of TCI states, that is, TCI state #3, or two TCI states, that is, TCI state #1 and TCI state #3, as the first TCI state by default.

In some other embodiments, the terminal determines at least one TCI state of the N TCI states indicated by the network device through the indication information as the first TCI state.

The network device sends fourth indication information to the terminal, and the fourth indication information is configured to indicate at least one TCI state among N TCI states. The terminal receives the fourth indication information and determines at least one TCI state among the N TCI states indicated by the fourth indication information as at least one first TCI state.

The fourth indication information is configured to indicate that at least one first TCI state is at least one TCI state among N TCI states. For example, the N TCI states include TCI state #1, TCI state #2, TCI state #3, and TCI state #4, and the fourth indication information may indicate that TCI state #1 and TCI state #2 are the first TCI states. Alternatively, the fourth indication information may indicate that TCI state #1 and TCI state #4 are the first TCI states. For another example, the N TCI states include TCI state #1 and TCI state #2, and the fourth indication information may indicate that TCI state #1 is the first TCI state.

In some embodiments, when the physical shared channel is PDSCH, the TCI state of the joint TCI state or the DL TCI state in the N TCI states includes TCI state #1 and TCI state #2, then the fourth indication information may indicate that the first one of TCI states, i.e., TCI state #1, or the second one of TCI states, i.e., TCI state #2, or the two TCI states, i.e., TCI state #1 and TCI state #2, are the first TCI state.

In some embodiments, when the physical shared channel is PUSCH, the TCI state of the joint TCI state or the UL TCI state in the N TCI states includes TCI state #1 and TCI state #3, then the fourth indication information may indicate that the first one of TCI states, i.e., TCI state #1, or the second one of TCI states, i.e., TCI state #3, or the two TCI states, i.e., TCI state #1 and TCI state #3, are the first TCI state.

In some embodiments, the fourth indication information is indicated by at least one of RRC, MAC CE, and DCI. For example, the fourth indication information is indicated by RRC. Or, the fourth indication information is indicated by MAC CE. Or, the fourth indication information is indicated by DCI.

In some embodiments, the fourth indication information may be indicated by DCI.

In some embodiments, the DCI indicating the fourth indication information is DCI format 1_1 or DCI format 1_2. Or, the DCI is DCI format 0_1 or DCI format 0_2.

For example, if the DCI is DCI format 1_1 or DCI format 1_2, the DCI is configured to indicate the fourth indication information of the first TCI state of PDSCH. If the DCI is DCI format 0_1 or DCI format 0_2, the DCI is configured to indicate the fourth indication information of the first TCI state of PUSCH.

In some embodiments, the DCI indicating the fourth indication information may include a transmission resource configuration (DL assignment, or UL assignment), that is, for indicating a time domain resource, a frequency domain resource, a modulation and coding scheme MCS, etc., for a PDSCH or a PUSCH; or, the DCI may not include a transmission resource configuration, that is, it does not include a time domain resource, a frequency domain resource, a modulation and coding scheme MCS, etc., for a PDSCH or a PUSCH.

In the solution provided in the embodiment of the present disclosure, the terminal determines at least one first TCI state for the physical shared channel according to the N TCI states configured by the network device, thereby ensuring that the physical shared channel is transmitted based on the determined TCI state, and improving the flexibility of transmitting the physical shared channel.

It should be noted that any two or more MAC CEs in the first MAC CE, the second MAC CE, the third MAC CE and the fourth MAC CE, the MAC CE carrying the second indication information and the MAC CE carrying the fourth indication information in the present disclosure may be different MAC CEs or the same MAC CE. Similarly, any two or more of the first DCI, the second DCI, and the DCI carrying the fourth indication information in the present disclosure may be different DCIs or the same DCI. Also, the RRC carrying the second indication information and the RRC carrying the fourth indication information in the present disclosure may be different RRCs or the same RRC.

It should be noted that the above embodiment can be split into new embodiments, or combined with other embodiments to form new embodiments, and the present disclosure does not limit the combination between the embodiments.

FIG. 6 shows a flowchart of a TCI state determination method provided by an example embodiment of the present disclosure, which can be applied to, for example, a terminal as shown in FIG. 1, and the method includes at least part of the following contents:
Step 601: A terminal receives first DCI sent by a network device, and the first DCI is configured to indicate a transmission resource of a physical shared channel.

The first DCI is configured to indicate the transmission resource of the physical shared channel. That is, the first DCI is configured to schedule the physical shared channel, and then data transmission can be performed between the network device and the terminal based on the physical shared channel. The transmission resource refers to the resource occupied when the data is transmitted between the network device and the terminal through the physical shared channel.

In some embodiments, the transmission resource includes at least one of a time domain resource, a frequency domain resource and other resources, which is not limited in the embodiments of the present disclosure.

In some embodiments, the physical shared channel includes at least one of a PDSCH and a PUSCH.

For the first DCI configured to indicate the physical shared channel, if the physical shared channel is different, then the first DCI is different.

In some embodiments, if the physical shared channel is a PDSCH, then the first DCI is a DCI format 1_0, and if the physical shared channel is a PUSCH, then the first DCI is a DCI format 0_0.

Step 602: The terminal determines at least one first TCI state corresponding to the physical shared channel.

In the embodiment of the present disclosure, the terminal determines the transmission resource of the physical shared channel indicated by the first DCI according to the first DCI, and then can determine at least one first TCI state corresponding to the physical shared channel, so as to facilitate data transmission between the terminal and the network device based on the at least one first TCI state that has been determined.

It should be noted that the embodiment of the present disclosure is described by the terminal determining at least one first TCI state corresponding to the physical shared channel. The first DCI configured to indicate the transmission resource of the physical shared channel is not configured to indicate at least one first TCI state. That is, the role of the first DCI is only to indicate the transmission resource, not to indicate the TCI state.

The present disclosure provides a scheme for determining the transmission resource of the physical shared channel indicated by the DCI according to the DCI, and then determining the TCI state corresponding to the physical shared channel, thereby ensuring that the physical shared channel is transmitted based on the determined TCI state, and improving the flexibility of transmitting the physical shared channel.

The embodiment shown in FIG. 6 illustrates the determination of the first TCI state by the terminal. The following describes how the terminal determines the first TCI state based on the control resource set.

In some embodiments, the control resource set corresponds to one or more TCI states, and the terminal determines at least one first TCI state based on the one or more TCI states corresponding to the control resource set.

In an embodiment of the present disclosure, the control resource set has a corresponding relationship with the one or more TCI states. The terminal can determine the one or more TCI states corresponding to the control resource set based on the control resource set, and then determine at least one first TCI state from the one or more TCI states corresponding to the control resource set.

In some embodiments, the control resource set includes control resource sets for different purposes. For example, the control resource set is a control resource set for sending the first DCI, or the control resource set is CORESET #0.

That is, the terminal can determine at least one first TCI state according to the TCI state corresponding to the control resource set for sending the first DCI. Alternatively, the terminal may also determine at least one first TCI state according to the TCI state corresponding to CORESET #0.

It should be noted that CORESET #0 in the embodiment of the present disclosure may also be a CORESET for sending the first DCI, or CORESET #0 may not be a CORESET for sending the first DCI, which is not limited in the embodiment of the present disclosure.

The embodiment of the present disclosure describes that the terminal can determine at least one first TCI state based on the one or more TCI states corresponding to the control resource set. For the one or more TCI states corresponding to the control resource set, the number of TCI states corresponding to the control resource set may be different. The following describes how the terminal determines the TCI state corresponding to the control resource set.

In some embodiments, the terminal determines at least one first TCI state based on the TCI state corresponding to the control resource set, including any of the following:
(1) In the case where the control resource set corresponds to a TCI state, at least one first TCI state is a TCI state corresponding to the control resource set.

In the embodiment of the present disclosure, if the control resource set corresponds to a TCI state, the terminal directly determines the TCI state as the first TCI state.

For example, if the control resource set configured to send the first DCI corresponds to a TCI state, the terminal directly determines the TCI state as the first TCI state. For another example, if CORESET #0 corresponds to a TCI state, the terminal directly determines the TCI state as the first TCI state.

(2) In the case where the control resource set corresponds to multiple TCI states, at least one first TCI state is one of the multiple TCI states corresponding to the control resource set.

In the embodiment of the present disclosure, the control resource set corresponds to multiple TCI states, and the terminal can select a TCI state from the multiple TCI states to be the first TCI state. That is, the terminal can select a TCI state from multiple TCI states according to the default rule, and then determine the selected TCI state as the first TCI state.

For example, if the control resource set configured to send the first DCI corresponds to multiple TCI states, then the terminal can select a TCI state from the multiple TCI states corresponding to the control resource set configured to send the first DCI to be the first TCI state. For another example, if CORESET #0 corresponds to multiple TCI states, then the terminal can select a TCI state from the multiple TCI states corresponding to CORESET #0 and determine it as the first TCI state.

In some embodiments, if the multiple TCI states corresponding to the control resource set include TCI state #1 and TCI state #2, the terminal can determine the first one of TCI states (TCI state #1) as the first TCI state, or the terminal can determine the second one of TCI states (TCI state #2) as the first TCI state.

(3) In the case where the control resource set corresponds to multiple TCI states, at least one first TCI state is multiple TCI states corresponding to the control resource set.

In the embodiment of the present disclosure, if the control resource set corresponds to multiple TCI states, the terminal may determine all the multiple TCI states as the first TCI states. That is, the terminal may determine the multiple TCI states corresponding to the control resource set as the first TCI states.

For example, if the control resource set configured to send the first DCI corresponds to multiple TCI states, then the terminal may determine the multiple TCI states corresponding to the control resource set configured to send the first DCI as the first TCI states. For another example, if CORESET #0 corresponds to multiple TCI states, then the terminal may determine the multiple TCI states corresponding to the CORESET #0 as the first TCI states.

In some embodiments, if the multiple TCI states corresponding to the control resource set include TCI state #1 and TCI state #2, the terminal may determine both of the first one of TCI states (TCI state #1) and the second one of TCI states (TCI state #2) as the first TCI states.

It should be noted that the embodiment of the present disclosure is described by taking the TCI state as an example. In another embodiment, when the physical shared channel is PDSCH, the TCI state determined based on the control resource set includes a joint TCI state and/or a downlink TCI state. That is, the terminal can determine the TCI state corresponding to the physical shared channel according to the joint TCI state and/or downlink TCI state corresponding to the control resource set. In another embodiment, when the physical shared channel is PUSCH, the TCI state determined based on the control resource set includes a joint TCI state and/or an uplink TCI state. That is, the terminal can determine the TCI state corresponding to the physical shared channel according to the joint TCI state and/or the uplink TCI state corresponding to the control resource set.

In the solution provided in the embodiment of the present disclosure, the terminal can determine the TCI state corresponding to the physical shared channel based on the TCI state corresponding to the control resource set, thereby ensuring that the physical shared channel is transmitted based on the determined TCI state, and improving the flexibility of transmitting the physical shared channel.

The above embodiment describes how the terminal determines the first TCI state based on the TCI state corresponding to the control resource set. Next, how the terminal determines the TCI state corresponding to the control resource set will be described.

In some embodiments, the terminal receives first indication information sent by the network device, and the first indication information is configured to indicate N TCI states, each TCI state includes at least one of a joint TCI state, an uplink TCI state, and a downlink TCI state, and the TCI state corresponding to the control resource set is a subset of the N TCI states, where N is a positive integer.

In the embodiment of the present disclosure, the network device may inform the terminal of N TCI states through indication information, and the terminal may subsequently determine the TCI state corresponding to the control resource set based on the N TCI states, where N is a positive integer.

The TCI state includes at least one of a joint TCI state, an uplink TCI state, and a downlink TCI state. That is, the N TCI states may include N joint TCI states, N uplink TCI states, N downlink TCI states, N downlink TCI states and uplink TCI states, or may also include N other TCI states, which are not limited in the embodiment of the present disclosure.

In some embodiments, the N TCI states include a QCL indication for at least one of PDCCH, PDSCH, PUCCH, PUSCH, CSI-RS, and SRS. That is to say, the N TCI states in the embodiment of the present disclosure can be used for the QCL indication of at least one channel and/or at least one signal mentioned above.

In some embodiments, the first indication information is carried in a third medium access control control element (MAC CE), and the third MAC CE is configured to indicate the N TCI states.

In some embodiments, the third MAC CE is configured to indicate the N TCI states corresponding to a code point in the TCI field of DCI (Downlink Control Information, DCI). That is, only the third MAC CE is sent but the DCI is not sent, and the N TCI states indicated in the third MAC CE only correspond to a code point in the TCI field of the DCI. Therefore, the base station does not need to send additional DCI to the terminal to indicate the code point, thereby saving signaling overhead.

In some embodiments, the first indication information is carried in a fourth MAC CE and second DCI. The fourth MAC CE is configured to indicate the N TCI states respectively corresponding to at least two code points in the TCI field of the second DCI, and the second DCI is configured to indicate one code point of at least two code points. That is, the fourth MAC CE and the second DCI are configured to indicate the second indication information at the same time. The fourth MAC CE indicates the N TCI states respectively corresponding to at least two code points in the TCI field of the second DCI. The second DCI is configured to indicate the code point, and then the N TCI states corresponding to the code point are obtained by querying the fourth MAC CE. At this time, the fourth MAC CE can indicate multiple sets of code point configurations, and each set of code point configurations corresponds to N TCI states. It should be noted that, each code point corresponds to the N TCI states, and the N value corresponding to each code point can be the same or different.

In some embodiments, the terminal can determine that the TCI state corresponding to the control resource set actually refers to multiplexing a part or all of the N TCI states based on the N TCI states configured by the network device.

In some embodiments, the N TCI states are called indicated TCI states, which indicates that the N TCI states can be applied to multiple channels/signals, and are not limited to a single channel/signal. For example, some or all of the N indicated TCI states can be used for the transmission of at least two of PDCCH, PDSCH, PUCCH, PUSCH, CSI-RS and SRS.

In some embodiments, the terminal receives second indication information sent by the network device, and the second indication information is configured to indicate at least one TCI state of the N TCI states corresponding to the control resource set, or the second indication information is configured to indicate at least one TCI state of the N TCI states corresponding to the control resource set group corresponding to the control resource set.

The N TCI states include multiple joint TCI states and/or downlink TCI states.

In an embodiment of the present disclosure, after the terminal determines the N TCI states indicated by the network device, the network device can configure the corresponding TCI state for the control resource set of the terminal through the second indication information, and the configured TCI state corresponding to the control resource set belongs to the N TCI states.

The second indication information can indicate the TCI state corresponding to the control resource set in two ways.

The second indication information is configured to indicate at least one TCI state of the N TCI states corresponding to the control resource set. For example, the N TCI states include TCI state #1 and TCI state #2, TCI state #3 and TCI state #4, and the second indication information may indicate that TCI state #1 and TCI state #2 are TCI states corresponding to the control resource set. Alternatively, the second indication information may indicate that TCI state #1 and TCI state #4 are the TCI states corresponding to the control resource set. For another example, the N TCI states include TCI state #1 and TCI state #2, and the second indication information may indicate that TCI state #1 is the TCI state corresponding to the control resource set.

Alternatively, the second indication information is configured to indicate at least one TCI state in the N TCI states corresponding to the control resource set group corresponding to the control resource set. For example, the N TCI states include TCI state #1, TCI state #2, TCI state #3 and TCI state #4, and the second indication information may indicate that TCI state #1 and TCI state #2 are TCI states corresponding to control resource set group #1, and the control resource set group corresponding to the control resource set is control resource set group #1, so the TCI state corresponding to the control resource set is TCI state #1 and TCI state #2. Alternatively, the second indication information may indicate that TCI state #1 and TCI state #4 are TCI states corresponding to the control resource set group corresponding to the control resource set. For another example, the N TCI states include TCI state #1 and TCI state #2, and the second indication information may indicate that TCI state #1 is TCI state corresponding to control resource set group #1, and the control resource set group corresponding to the control resource set is control resource set group #1, so the TCI state corresponding to the control resource set is TCI state #1.

In some embodiments, the correspondence between the control resource set and the control resource set group is configured by RRC. That is, the network device configures the correspondence between the control resource set and the control resource set group for the terminal through RRC.

In some embodiments, the second indication information is indicated by at least one of RRC and the first MAC CE.

In another embodiment, the terminal can determine the TCI state corresponding to the control resource set from the N TCI states by default rules.

In the embodiment of the present disclosure, the N TCI states include multiple joint TCI states and/or downlink TCI states; the scheme for the terminal to determine the TCI state of the control resource set includes any of the following:
The first scheme: at least one TCI state among the N TCI states is determined as the TCI state corresponding to the control resource set by default.

In the embodiment of the present disclosure, after the terminal determines the N TCI states indicated by the network device, the terminal can determine the TCI state corresponding to the control resource set according to the default rule, and the TCI state corresponding to the control resource set belongs to the N TCI states.

The terminal determines at least one TCI state in the N TCI states as the TCI state corresponding to the control resource set by default. For example, the N TCI states include TCI state #1, TCI state #2, TCI state #3 and TCI state #4, and TCI state #1 and TCI state #2 are determined as TCI states corresponding to the control resource set. Or, TCI state #1 and TCI state #4 are determined as the TCI states corresponding to the control resource set. For another example, the N TCI states include TCI state #1 and TCI state #2, and TCI state #1 is determined as the TCI state corresponding to the control resource set.

The second scheme: at least one TCI state among the N TCI states is determined as the TCI state corresponding to the control resource set group corresponding to the control resource set by default.

The terminal determines at least one TCI state among the N TCI states as the TCI state corresponding to the control resource set group corresponding to the control resource set by default. For example, the N TCI states include TCI state #1, TCI state #2, TCI state #3 and TCI state #4, and TCI state #1 and TCI state #2 are determined as the TCI states corresponding to control resource set group #1, and the control resource set group corresponding to the control resource set is control resource set group #1, so the TCI states corresponding to the control resource set are TCI state #1 and TCI state #2. Alternatively, TCI state #1 and TCI state #4 are determined as the TCI states corresponding to the control resource set group corresponding to the control resource set. For another example, the N TCI states include TCI state #1 and TCI state #2, and TCI state #1 is determined as the TCI state corresponding to control resource set group #1, and the control resource set group corresponding to the control resource set is control resource set group #1, so the TCI state corresponding to the control resource set is TCI state #1.

In some embodiments, the correspondence between the control resource set and the control resource set group is configured by RRC and/or MAC CE. That is, the network device configures the correspondence between the control resource set and the control resource set group for the terminal through RRC and/or MAC CE.

In the solution provided in the embodiment of the present disclosure, the network device configures N TCI states for the terminal, and the terminal determines the TCI state corresponding to the control resource set based on the configured N TCI states, which expands the way in which the terminal determines the TCI state corresponding to the control resource set, thereby ensuring that the physical shared channel is transmitted based on the determined TCI state, and improving the flexibility of transmitting the physical shared channel.

It should be noted that the embodiment of the present disclosure is only described by taking the example of the terminal determining the TCI state corresponding to the control resource set based on the N TCI states configured by the network device. In another embodiment, the network device can directly configure the TCI state corresponding to the control resource set for the terminal, without having to determine the TCI state corresponding to the control resource set based on the N TCI states.

In an embodiment of the present disclosure, the network device sends a second MAC CE to the terminal, and the second MAC CE is configured to indicate one or more TCI states corresponding to the control resource set. The terminal receives the second MAC CE sent by the network device, and can determine one or more TCI states corresponding to the control resource set indicated by the second MAC CE. The terminal can subsequently determine at least one first TCI state according to the one or more TCI states corresponding to the control resource set.

The embodiment shown in FIG. 6 illustrates the determination of the first TCI state by the terminal. The following describes how the terminal determines the first TCI state according to the N TCI states configured by the network device.

In some embodiments, the terminal receives third indication information sent by the network device, and the third indication information is configured to indicate N TCI states. The TCI state includes at least one of a joint TCI state, an uplink TCI state, and a downlink TCI state. The TCI state corresponding to the control resource set is a subset of the N TCI states, and N is a positive integer. The terminal determines at least one first TCI state based on the N TCI states.

In an embodiment of the present disclosure, the network device may inform the terminal of N TCI states through indication information, and the terminal may subsequently determine at least one first TCI state corresponding to the physical shared channel based on the N TCI states, where N is a positive integer.

The TCI state includes at least one of a joint TCI state, an uplink TCI state, and a downlink TCI state. That is, the N TCI states may include N joint TCI states, N uplink TCI states, N downlink TCI states, N downlink TCI states and uplink TCI states, or may also include N other TCI states, which is not limited in the embodiment of the present disclosure.

In some embodiments, the N TCI states include a QCL indication for at least one of PDCCH, PDSCH, PUCCH, PUSCH, CSI-RS, and SRS. That is to say, the N TCI states in the embodiment of the present disclosure can be used for the QCL indication of at least one channel and/or at least one signal mentioned above.

In some embodiments, the third indication information is carried in a third medium access control control element (MAC CE), and the third MAC CE is configured to indicate the N TCI states.

In some embodiments, the third MAC CE is configured to indicate the N TCI states corresponding to a code point in the TCI field of DCI (Downlink Control Information, DCI). That is, only the third MAC CE is sent but the DCI is not sent, and the N TCI states indicated in the third MAC CE only correspond to a code point in the TCI field of the DCI. Therefore, the base station does not need to send additional DCI to the terminal to indicate the code point, thereby saving signaling overhead.

In some embodiments, the first indication information is carried in a fourth MAC CE and second DCI. The fourth MAC CE is configured to indicate the N TCI states respectively corresponding to at least two code points in the TCI field of the second DCI, and the second DCI is configured to indicate one code point of the at least two code points. That is, the fourth MAC CE and the second DCI are configured to indicate the second indication information at the same time. The fourth MAC CE indicates the N TCI states respectively corresponding to at least two code points in the TCI field of the second DCI. The second DCI is configured to indicate the code point, and then the N TCI states corresponding to the code point are obtained by querying the fourth MAC CE. At this time, the fourth MAC CE can indicate multiple sets of code point configurations, and each set of code point configurations corresponds to N TCI states. It should be noted that, each code point corresponds to the N TCI states, and the N value corresponding to each code point can be the same or different.

In some embodiments, the terminal can determine that the TCI state corresponding to the control resource set actually refers to multiplexing a part or all of the N TCI states based on the N TCI states configured by the network device.

In some embodiments, the N TCI states are called indicated TCI states, which indicates that the N TCI states can be applied to multiple channels/signals, and are not limited to a single channel/signal. For example, some or all of the N indicated TCI states can be used for the transmission of at least two of PDCCH, PDSCH, PUCCH, PUSCH, CSI-RS and SRS.

In the embodiment of the present disclosure, the terminal determines N TCI states configured by the network device, and the terminal can select at least one TCI state from the N TCI states as the first TCI state.

In some embodiments, the terminal determines at least one TCI state among N TCI states as at least one first TCI state by default.

In an embodiment of the present disclosure, the terminal determines at least one TCI state among N TCI states as at least one first TCI state by default. For example, N TCI states include TCI state #1, TCI state #2, TCI state #3, and TCI state #4, and TCI state #1 and TCI state #2 are determined as the first TCI states. Or, TCI state #1 and TCI state #4 are determined as the first TCI states. For another example, N TCI states include TCI state #1 and TCI state #2, and TCI state #1 is determined as the first TCI state.

In some embodiments, when the physical shared channel is PDSCH, the TCI state of the joint TCI state or DL TCI state in the N TCI states includes TCI state #1 and TCI state #2, then the terminal can determine the first one of TCI states, that is, TCI state #1, or the second one of TCI states, that is, TCI state #2, or two TCI states, that is, TCI state #1 and TCI state #2, as the first TCI state by default.

In some embodiments, when the physical shared channel is PUSCH, the TCI state of the joint TCI state or UL TCI state in the N TCI states includes TCI state #1 and TCI state #3, then the terminal can determine the first one of TCI states, that is, TCI state #1, or the second one of TCI states, that is, TCI state #3, or two TCI states, that is, TCI state #1 and TCI state #3, as the first TCI state by default.

In some other embodiments, the terminal determines at least one TCI state of the N TCI states indicated by the network device through the indication information as the first TCI state.

The network device sends fourth indication information to the terminal, and the fourth indication information is configured to indicate at least one TCI state among N TCI states. The terminal receives the fourth indication information and determines at least one TCI state among the N TCI states indicated by the fourth indication information as at least one first TCI state.

The fourth indication information is configured to indicate that at least one first TCI state is at least one TCI state among N TCI states. For example, the N TCI states include TCI state #1, TCI state #2, TCI state #3, and TCI state #4, and the fourth indication information may indicate that TCI state #1 and TCI state #2 are the first TCI states. Alternatively, the fourth indication information may indicate that TCI state #1 and TCI state #4 are the first TCI states. For another example, the N TCI states include TCI state #1 and TCI state #2, and the fourth indication information may indicate that TCI state #1 is the first TCI state.

In some embodiments, when the physical shared channel is PDSCH, the TCI state of the joint TCI state or the DL TCI state in the N TCI states includes TCI state #1 and TCI state #2, then the fourth indication information may indicate that the first one of TCI states, i.e., TCI state #1, or the second one of TCI states, i.e., TCI state #2, or the two TCI states, i.e., TCI state #1 and TCI state #2, are the first TCI state.

In some embodiments, when the physical shared channel is PUSCH, the TCI state of the joint TCI state or the UL TCI state in the N TCI states includes TCI state #1 and TCI state #3, then the fourth indication information may indicate that the first one of TCI states, i.e., TCI state #1, or the second one of TCI states, i.e., TCI state #3, or the two TCI states, i.e., TCI state #1 and TCI state #3, are the first TCI state.

In some embodiments, the fourth indication information is indicated by at least one of RRC, MAC CE, and DCI. For example, the fourth indication information is indicated by RRC. Or, the fourth indication information is indicated by MAC CE. Or, the fourth indication information is indicated by DCI.

In some embodiments, the fourth indication information may be indicated by DCI.

In some embodiments, the DCI indicating the fourth indication information is DCI format 1_1 or DCI format 1_2. Or, the DCI indicating the fourth indication information is DCI format 0_1 or DCI format 0_2.

For example, if the DCI is DCI format 1_1 or DCI format 1_2, the DCI is configured to indicate the fourth indication information of the first TCI state of PDSCH. If the DCI is DCI format 0_1 or DCI format 0_2, the DCI is configured to indicate the fourth indication information of the first TCI state of PUSCH.

In some embodiments, the DCI indicating the fourth indication information may include a transmission resource configuration (DL assignment, or UL assignment), that is, for indicating a time domain resource, a frequency domain resource, a modulation and coding scheme MCS, etc., for a PDSCH or a PUSCH; or, the DCI may not include a transmission resource configuration, that is, it does not include a time domain resource, a frequency domain resource, a modulation and coding scheme MCS, etc., for a PDSCH or a PUSCH.

In the solution provided in the embodiment of the present disclosure, the terminal determines at least one first TCI state for a physical shared channel according to the N TCI states configured by the network device, thereby ensuring that the physical shared channel is transmitted based on the determined TCI state, and improving the flexibility of transmitting the physical shared channel.

It should be noted that any two or more MAC CEs in the first MAC CE, the second MAC CE, the third MAC CE and the fourth MAC CE, the MAC CE carrying the second indication information and the MAC CE carrying the fourth indication information in the present disclosure may be different MAC CEs or the same MAC CE. Similarly, any two or more of the first DCI, the second DCI, and the DCI carrying the fourth indication information in the present disclosure may be different DCIs or the same DCI. Also, the RRC carrying the second indication information and the RRC carrying the fourth indication information in the present disclosure may be different RRCs or the same RRC.

FIG. 7 shows a flowchart of a TCI state determination method provided by an example embodiment of the present disclosure, which can be applied to, for example, a network device as shown in FIG. 1, and the method includes at least part of the following contents:
Step 701: A network device sends first DCI to a terminal, and the first DCI is configured to indicate a transmission resource of a physical shared channel, and the terminal is configured to determine at least one first TCI state corresponding to the physical shared channel.

The first DCI is configured to indicate the transmission resource of the physical shared channel. That is, the first DCI is configured to schedule the physical shared channel, and then data transmission can be performed between the network device and the terminal based on the physical shared channel. The transmission resource refers to the resource occupied when the data is transmitted between the network device and the terminal through the physical shared channel.

In some embodiments, the transmission resource includes at least one of a time domain resource, a frequency domain resource and other resources, which is not limited in the embodiments of the present disclosure.

In some embodiments, the physical shared channel includes at least one of PDSCH and PUSCH.

For the first DCI configured to indicate the physical shared channel, if the physical shared channel is different, then the first DCI is different.

In some embodiments, if the physical shared channel is a PDSCH, then the first DCI is a DCI format 1_0, and if the physical shared channel is a PUSCH, then the first DCI is a DCI format 0_0.

In the embodiment of the present disclosure, the terminal determines the transmission resource of the physical shared channel indicated by the first DCI according to the first DCI, and then can determine at least one first TCI state corresponding to the physical shared channel, so as to facilitate data transmission between the terminal and the network device based on the at least one first TCI state that has been determined.

It should be noted that the embodiment of the present disclosure is described by the terminal determining at least one first TCI state corresponding to the physical shared channel. The first DCI configured to indicate the transmission resource of the physical shared channel is not configured to indicate at least one first TCI state. That is, the role of the first DCI is only to indicate the transmission resource, not to indicate the TCI state.

The present disclosure provides a scheme for determining the transmission resource of the physical shared channel indicated by the DCI according to the DCI, and then determining the TCI state corresponding to the physical shared channel, thereby ensuring that the physical shared channel is transmitted based on the determined TCI state, and improving the flexibility of transmitting the physical shared channel.

The embodiment shown in FIG. 7 illustrates the determination of the first TCI state by the terminal. The following describes how the terminal determines the first TCI state based on the control resource set.

In some embodiments, the control resource set corresponds to one or more TCI states, and at least one first TCI state is determined based on the one or more TCI states corresponding to the control resource set.

In an embodiment of the present disclosure, the control resource set has a corresponding relationship with the one or more TCI states. The terminal can determine the one or more TCI states corresponding to the control resource set based on the control resource set, and then determine at least one first TCI state from the one or more TCI states corresponding to the control resource set.

In some embodiments, the control resource set includes control resource sets for different purposes. For example, the control resource set is a control resource set for sending the first DCI, or the control resource set is CORESET #0.

That is, the terminal can determine at least one first TCI state according to the TCI state corresponding to the control resource set for sending the first DCI. Alternatively, the terminal may also determine at least one first TCI state according to the TCI state corresponding to CORESET #0.

It should be noted that CORESET #0 in the embodiment of the present disclosure may also be a CORESET for sending the first DCI, or CORESET #0 may not be a CORESET for sending the first DCI, which is not limited in the embodiment of the present disclosure.

The embodiment of the present disclosure describes that the terminal can determine at least one first TCI state based on the one or more TCI states corresponding to the control resource set. For the one or more TCI states corresponding to the control resource set, the number of TCI states corresponding to the control resource set may be different. The following describes how the terminal determines the TCI state corresponding to the control resource set.

In some embodiments, the terminal determines at least one first TCI state based on the TCI state corresponding to the control resource set, including any of the following:
(1) In the case where the control resource set corresponds to a TCI state, at least one first TCI state is a TCI state corresponding to the control resource set.

In the embodiment of the present disclosure, if the control resource set corresponds to a TCI state, the terminal directly determines the TCI state as the first TCI state.

For example, if the control resource set configured to send the first DCI corresponds to a TCI state, the terminal directly determines the TCI state as the first TCI state. For another example, if CORESET #0 corresponds to a TCI state, the terminal directly determines the TCI state as the first TCI state.

(2) In the case where the control resource set corresponds to multiple TCI states, at least one first TCI state is one of the multiple TCI states corresponding to the control resource set.

In the embodiment of the present disclosure, the control resource set corresponds to multiple TCI states, and the terminal can select a TCI state from the multiple TCI states to be the first TCI state. That is, the terminal can select a TCI state from the multiple TCI states according to the default rule, and then determine the selected TCI state as the first TCI state.

For example, if the control resource set configured to send the first DCI corresponds to multiple TCI states, then the terminal can select a TCI state from the multiple TCI states corresponding to the control resource set configured to send the first DCI to be the first TCI state. For another example, if CORESET #0 corresponds to multiple TCI states, then the terminal can select a TCI state from the multiple TCI states corresponding to the CORESET #0 and determine it as the first TCI state.

In some embodiments, if the multiple TCI states corresponding to the control resource set include TCI state #1 and TCI state #2, the terminal may determine the first one of TCI states (TCI state #1) as the first TCI state, or the terminal may determine the second one of TCI states (TCI state #2) as the first TCI state.

(3) In the case where the control resource set corresponds to multiple TCI states, at least one first TCI state is multiple TCI states corresponding to the control resource set.

In the embodiment of the present disclosure, if the control resource set corresponds to multiple TCI states, the terminal may determine all the multiple TCI states as the first TCI states. That is, the terminal may determine the multiple TCI states corresponding to the control resource set as the first TCI states.

For example, if the control resource set configured to send the first DCI corresponds to multiple TCI states, then the terminal may determine the multiple TCI states corresponding to the control resource set configured to send the first DCI as the first TCI states. For another example, if CORESET #0 corresponds to multiple TCI states, then the terminal may determine the multiple TCI states corresponding to the CORESET #0 as the first TCI states.

In some embodiments, if the multiple TCI states corresponding to the control resource set include TCI state #1 and TCI state #2, the terminal may determine both of the first one of TCI states (TCI state #1) and the second one of TCI states (TCI state #2) as the first TCI states.

It should be noted that the embodiment of the present disclosure is described by taking the TCI state as an example. In another embodiment, when the physical shared channel is PDSCH, the TCI state determined based on the control resource set includes a joint TCI state and/or a downlink TCI state. That is, the terminal can determine the TCI state corresponding to the physical shared channel according to the joint TCI state and/or the downlink TCI state corresponding to the control resource set. In another embodiment, when the physical shared channel is PUSCH, the TCI state determined based on the control resource set includes a joint TCI state and/or an uplink TCI state. That is, the terminal can determine the TCI state corresponding to the physical shared channel according to the joint TCI state and/or the uplink TCI state corresponding to the control resource set.

In the solution provided in the embodiment of the present disclosure, the terminal can determine the TCI state corresponding to the physical shared channel based on the TCI state corresponding to the control resource set, thereby ensuring that the physical shared channel is transmitted based on the determined TCI state, and improving the flexibility of transmitting the physical shared channel.

The above embodiment describes how the terminal determines the first TCI state based on the TCI state corresponding to the control resource set. Next, how the terminal determines the TCI state corresponding to the control resource set will be described.

In some embodiments, the network device sends first indication information to the terminal, and the first indication information is configured to indicate N TCI states, each TCI state includes at least one of a joint TCI state, an uplink TCI state, and a downlink TCI state, and the TCI state corresponding to the control resource set is a subset of the N TCI states, where N is a positive integer.

In the embodiment of the present disclosure, the network device can inform the terminal of N TCI states through the indication information, and subsequently, the terminal can determine the TCI state corresponding to the control resource set based on the N TCI states, where N is a positive integer.

The TCI state includes at least one of a joint TCI state, an uplink TCI state, and a downlink TCI state. That is, the N TCI states may include N joint TCI states, N uplink TCI states, N downlink TCI states, N downlink TCI states and uplink TCI states, or may also include N other TCI states, which is not limited in the embodiments of the present disclosure.

In some embodiments, the N TCI states include a QCL indication for at least one of PDCCH, PDSCH, PUCCH, PUSCH, CSI-RS, and SRS. That is, the N TCI states in the embodiments of the present disclosure can be used for the QCL indication of at least one channel and/or at least one signal mentioned above.

In some embodiments, the first indication information is carried in a third medium access control control element (MAC CE), and the third MAC CE is configured to indicate the N TCI states.

In some embodiments, the third MAC CE is configured to indicate the N TCI states corresponding to a code point in the TCI field of DCI (Downlink Control Information, DCI). That is, only the third MAC CE is sent but the DCI is not sent, and the N TCI states indicated in the third MAC CE only correspond to one code point in the TCI field of the DCI. Therefore, the base station does not need to send additional DCI to the terminal to indicate the code point, thereby saving signaling overhead.

In some embodiments, the first indication information is carried in a fourth MAC CE and second DCI. The fourth MAC CE is configured to indicate the N TCI states respectively corresponding to at least two code points in the TCI field of the second DCI, and the second DCI is configured to indicate one code point in the at least two code points. That is, the fourth MAC CE and the second DCI are configured to indicate the second indication information at the same time. The fourth MAC CE indicates the N TCI states respectively corresponding to at least two code points in the TCI field of the second DCI. The second DCI is configured to indicate the code point, and then the N TCI states corresponding to the code point are obtained by querying the fourth MAC CE. At this time, the fourth MAC CE can indicate multiple sets of code point configurations, and each set of code point configurations corresponds to N TCI states. It should be noted that, each code point corresponds to the N TCI states, and the N value corresponding to each code point can be the same or different.

In some embodiments, the terminal can determine that the TCI state corresponding to the control resource set actually refers to multiplexing a part or all of the N TCI states according to the N TCI states configured by the network device.

In some embodiments, the N TCI states are called indicated TCI states, which indicates that the N TCI states can be applied to multiple channels/signals, and are not limited to a single channel/signal. For example, some or all of the N indicated TCI states can be used for the transmission of at least two of PDCCH, PDSCH, PUCCH, PUSCH, CSI-RS and SRS.

In some embodiments, the network device sends second indication information to the terminal, and the second indication information is configured to indicate at least one TCI state in the N TCI states corresponding to the control resource set, or the second indication information is configured to indicate at least one TCI state in the N TCI states corresponding to the control resource set group corresponding to the control resource set.

The N TCI states include multiple joint TCI states and/or downlink TCI states.

In an embodiment of the present disclosure, after the terminal determines the N TCI states indicated by the network device, the network device can configure the corresponding TCI state for the control resource set of the terminal through the second indication information, and the configured TCI state corresponding to the control resource set belongs to the N TCI states.

The second indication information can indicate the TCI state corresponding to the control resource set in two ways.

The second indication information is configured to indicate at least one TCI state of the N TCI states corresponding to the control resource set. For example, the N TCI states include TCI state #1 and TCI state #2, TCI state #3 and TCI state #4, and the second indication information can indicate that TCI state #1 and TCI state #2 are the TCI states corresponding to the control resource set. Alternatively, the second indication information can indicate that TCI state #1 and TCI state #4 are the TCI states corresponding to the control resource set. For another example, the N TCI states include TCI state #1 and TCI state #2, and the second indication information can indicate that TCI state #1 is the TCI state corresponding to the control resource set.

Alternatively, the second indication information is configured to indicate at least one TCI state in the N TCI states corresponding to the control resource set group corresponding to the control resource set. For example, the N TCI states include TCI state #1, TCI state #2, TCI state #3, and TCI state #4, and the second indication information may indicate that TCI state #1 and TCI state #2 are TCI states corresponding to control resource set group #1, and the control resource set group corresponding to the control resource set is control resource set group #1, so the TCI state corresponding to the control resource set is TCI state #1 and TCI state #2. Alternatively, the second indication information may indicate that TCI state #1 and TCI state #4 are TCI states corresponding to the control resource set group corresponding to the control resource set. For another example, the N TCI states include TCI state #1 and TCI state #2, and the second indication information may indicate that TCI state #1 is TCI state corresponding to the control resource set group #1, and the control resource set group corresponding to the control resource set is control resource set group #1, so the TCI state corresponding to the control resource set is TCI state #1.

In some embodiments, the correspondence between the control resource set and the control resource set group is configured by RRC. That is, the network device configures the correspondence between the control resource set and the control resource set group for the terminal through RRC.

In some embodiments, the second indication information is indicated by at least one of RRC and the first MAC CE.

It should be noted that the terminal can also determine the TCI state corresponding to the control resource set from the N TCI states by default rules.

In the embodiment of the present disclosure, the N TCI states include multiple joint TCI states and/or downlink TCI states; the scheme for the terminal to determine the TCI state of the control resource set includes any of the following:
The first scheme: the TCI state corresponding to the control resource set defaults to at least one TCI state among the N TCI states.

In the embodiment of the present disclosure, after the terminal determines the N TCI states indicated by the network device, the terminal can determine the TCI state corresponding to the control resource set according to the default rule, and the TCI state corresponding to the control resource set belongs to the N TCI states.

The terminal determines at least one TCI state in the N TCI states as the TCI state corresponding to the control resource set by default. For example, N TCI states include TCI state #1, TCI state #2, TCI state #3 and TCI state #4, and TCI state #1 and TCI state #2 are determined as TCI states corresponding to the control resource set. Or, TCI state #1 and TCI state #4 are determined as the TCI states corresponding to the control resource set. For another example, N TCI states include TCI state #1 and TCI state #2, and TCI state #1 is determined as the TCI state corresponding to the control resource set.

The second scheme: The TCI state corresponding to the control resource set group corresponding to the control resource set defaults to at least one TCI state among the N TCI states.

The terminal determines at least one TCI state among the N TCI states as the TCI state corresponding to the control resource set group corresponding to the control resource set by default. For example, the N TCI states include TCI state #1, TCI state #2, TCI state #3 and TCI state #4, and TCI state #1 and TCI state #2 are determined as the TCI states corresponding to control resource set group #1, and the control resource set group corresponding to the control resource set is control resource set group #1, so the TCI states corresponding to the control resource set are TCI state #1 and TCI state #2. Alternatively, TCI state #1 and TCI state #4 are determined as the TCI states corresponding to the control resource set group corresponding to the control resource set. For another example, the N TCI states include TCI state #1 and TCI state #2, and TCI state #1 is determined as the TCI state corresponding to control resource set group #1, and the control resource set group corresponding to the control resource set is control resource set group #1, so the TCI state corresponding to the control resource set is TCI state #1.

In some embodiments, the correspondence between the control resource set and the control resource set group is configured by RRC and/or MAC CE. That is, the network device configures the correspondence between the control resource set and the control resource set group for the terminal through RRC and/or MAC CE.

In the solution provided in the embodiment of the present disclosure, the network device configures N TCI states for the terminal, and the terminal determines the TCI state corresponding to the control resource set based on the configured N TCI states, which expands the way in which the terminal determines the TCI state corresponding to the control resource set, thereby ensuring that the physical shared channel is transmitted based on the determined TCI state, and improving the flexibility of transmitting the physical shared channel.

It should be noted that the embodiment of the present disclosure is only described by taking the example of the terminal determining one or more TCI states corresponding to the control resource set based on the N TCI states configured by the network device. In another embodiment, the network device can directly configure one or more TCI states corresponding to the control resource set for the terminal, without having to determine the TCI state corresponding to the control resource set based on the N TCI states.

In an embodiment of the present disclosure, the network device sends a second MAC CE to the terminal, and the second MAC CE is configured to indicate one or more TCI states corresponding to the control resource set. The terminal receives the second MAC CE sent by the network device, and can determine one or more TCI states corresponding to the control resource set indicated by the second MAC CE. The terminal can subsequently determine at least one first TCI state according to the one or more TCI states corresponding to the control resource set.

The embodiment shown in FIG. 7 illustrates the determination of the first TCI state by the terminal. The following describes how the terminal determines the first TCI state according to the N TCI states configured by the network device.

In some embodiments, the network device sends third indication information to the terminal, and the third indication information is configured to indicate N TCI states. The TCI state includes at least one of a joint TCI state, an uplink TCI state, and a downlink TCI state. The TCI state corresponding to the control resource set is a subset of the N TCI states, and N is a positive integer. At least one first TCI state is determined based on the N TCI states.

In an embodiment of the present disclosure, the network device may inform the terminal of N TCI states through indication information, and the terminal may subsequently determine at least one first TCI state corresponding to the physical shared channel based on the N TCI states, and N is a positive integer.

The TCI state includes at least one of a joint TCI state, an uplink TCI state and a downlink TCI state. That is, the N TCI states may include N joint TCI states, N uplink TCI states, N downlink TCI states, N downlink TCI states and uplink TCI states, or may also include N other TCI states, which is not limited in the embodiments of the present disclosure.

In some embodiments, the N TCI states include a QCL indication for at least one of PDCCH, PDSCH, PUCCH, PUSCH, CSI-RS and SRS. That is to say, the N TCI states in the embodiments of the present disclosure can be used for the QCL indication of at least one channel and/or at least one signal mentioned above.

In some embodiments, the third indication information is carried in a third media access control layer control element (MAC CE), and the third MAC CE is configured to indicate the N TCI states.

In some embodiments, the third MAC CE is configured to indicate the N TCI states corresponding to a code point in the TCI field of DCI (Downlink Control Information, DCI). That is, only the third MAC CE is sent but the DCI is not sent. The N TCI states indicated in the third MAC CE only correspond to one code point in the TCI field of the DCI. Therefore, the base station does not need to send additional DCI to the terminal to indicate the code point, thereby saving signaling overhead.

In some embodiments, the first indication information is carried in a fourth MAC CE and second DCI. The fourth MAC CE is configured to indicate the N TCI states respectively corresponding to at least two code points in the TCI field of the second DCI, and the second DCI is configured to indicate one code point in the at least two code points. That is, the fourth MAC CE and the second DCI are configured to indicate the second indication information at the same time. The fourth MAC CE indicates the N TCI states respectively corresponding to at least two code points in the TCI field of the second DCI. The second DCI is configured to indicate the code point, and then the N TCI states corresponding to the code point are obtained by querying the fourth MAC CE. At this time, the fourth MAC CE can indicate multiple sets of code point configurations, and each set of code point configurations corresponds to N TCI states. It should be noted that, each code point corresponds to N TCI states, and the N value corresponding to each code point can be the same or different.

In some embodiments, the terminal can determine that the TCI state corresponding to the control resource set actually refers to multiplexing a part or all of the N TCI states based on the N TCI states configured by the network device.

In some embodiments, the N TCI states are called indicated TCI states, which indicates that the N TCI states can be applied to multiple channels/signals, and are not limited to a single channel/signal. For example, some or all of the N indicated TCI states can be used for the transmission of at least two of PDCCH, PDSCH, PUCCH, PUSCH, CSI-RS and SRS.

In an embodiment of the present disclosure, the terminal determines the N TCI states configured by the network device, and the terminal can select at least one TCI state from the N TCI states as the first TCI state.

In some embodiments, the terminal determines at least one TCI state among the N TCI states as at least one first TCI state by default.

In an embodiment of the present disclosure, the terminal determines at least one TCI state among the N TCI states as at least one first TCI state by default. For example, N TCI states include TCI state #1, TCI state #2, TCI state #3, and TCI state #4, and TCI state #1 and TCI state #2 are determined as the first TCI states. Alternatively, TCI state #1 and TCI state #4 are determined as the first TCI states. For another example, N TCI states include TCI state #1 and TCI state #2, and TCI state #1 is determined as the first TCI state.

In some embodiments, when the physical shared channel is PDSCH, the TCI state of the joint TCI state or DL TCI state in the N TCI states includes TCI state #1 and TCI state #2, then the terminal can determine the first one of TCI states, i.e., TCI state #1, or the second one of TCI states, i.e., TCI state #2, or the two TCI states, i.e., TCI state #1 and TCI state #2, as the first TCI state by default.

In some embodiments, when the physical shared channel is PUSCH, the TCI state of the joint TCI state or the UL TCI state in the N TCI states includes TCI state #1 and TCI state #3, then the terminal can determine the first one of TCI states, that is, TCI state #1, or the second one of TCI states, that is, TCI state #3, or two TCI states, that is, TCI state #1 and TCI state #3, as the first TCI state by default.

In some other embodiments, the terminal determines at least one TCI state of the N TCI states indicated by the network device through indication information as the first TCI state.

The network device sends fourth indication information to the terminal, and the fourth indication information is configured to indicate at least one TCI state among the N TCI states. The terminal receives the fourth indication information and determines at least one TCI state among the N TCI states indicated by the fourth indication information as at least one first TCI state.

The fourth indication information is configured to indicate that at least one first TCI state is at least one TCI state among the N TCI states. For example, N TCI states include TCI state #1, TCI state #2, TCI state #3, and TCI state #4, and the fourth indication information may indicate that TCI state #1 and TCI state #2 are the first TCI states. Alternatively, the fourth indication information may indicate that TCI state #1 and TCI state #4 are the first TCI states. For another example, N TCI states include TCI state #1 and TCI state #2, and the fourth indication information may indicate that TCI state #1 is the first TCI state.

In some embodiments, when the physical shared channel is PDSCH, the TCI state of the joint TCI state or the DL TCI state in the N TCI states includes TCI state #1 and TCI state #2, then the fourth indication information may indicate that the first one of TCI states, i.e., TCI state #1, or the second one of TCI states, i.e., TCI state #2, or the two TCI states, i.e., TCI state #1 and TCI state #2, are the first TCI state.

In some embodiments, when the physical shared channel is PUSCH, the TCI states of the joint TCI state or the UL TCI state in the N TCI states include TCI state #1 and TCI state #3, then the fourth indication information may indicate that the first one of TCI states, i.e., TCI state #1, or the second one of TCI states, i.e., TCI state #3, or the two TCI states, i.e., TCI state #1 and TCI state #3, are the first TCI state.

In some embodiments, the fourth indication information is indicated by at least one of RRC, MAC CE, and DCI. For example, the fourth indication information is indicated by RRC. Or, the fourth indication information is indicated by MAC CE. Or, the fourth indication information is indicated by DCI.

In some embodiments, the fourth indication information may be indicated by DCI.

In some embodiments, the DCI indicating the fourth indication information is DCI format 1_1 or DCI format 1_2. Or, the DCI indicating the fourth indication information is DCI format 0_1 or DCI format 0_2.

For example, if the DCI is DCI format 1_1 or DCI format 1_2, the DCI is configured to indicate the fourth indication information of the first TCI state of PDSCH. If the DCI is DCI format 0_1 or DCI format 0_2, the DCI is configured to indicate the fourth indication information of the first TCI state of PUSCH.

In some embodiments, the DCI indicating the fourth indication information may include a transmission resource configuration (DL assignment, or UL assignment), that is, for indicating a time domain resource, a frequency domain resource, a modulation and coding scheme MCS, etc. for a PDSCH or a PUSCH; or, the DCI may not include a transmission resource configuration, that is, it does not include a time domain resource, a frequency domain resource, a modulation and coding scheme MCS, etc. for a PDSCH or a PUSCH.

The transmission resource configuration includes at least one of the time domain resource, the frequency domain resource and the MCS.

In the solution provided in the embodiment of the present disclosure, the terminal determines at least one first TCI state for the physical shared channel according to the N TCI states configured by the network device, thereby ensuring that the physical shared channel is transmitted based on the determined TCI state, and improving the flexibility of transmitting the physical shared channel.

It should be noted that any two or more MAC CEs in the first MAC CE, the second MAC CE, the third MAC CE and the fourth MAC CE, the MAC CE carrying the second indication information and the MAC CE carrying the fourth indication information in the present disclosure may be different MAC CEs or the same MAC CE. Similarly, any two or more DCIs in the first DCI, the second DCI and the DCI carrying the fourth indication information in the present disclosure may be different DCIs or the same DCI. Also, the RRC carrying the second indication information and the RRC carrying the fourth indication information in the present disclosure may be different RRCs or the same RRC.

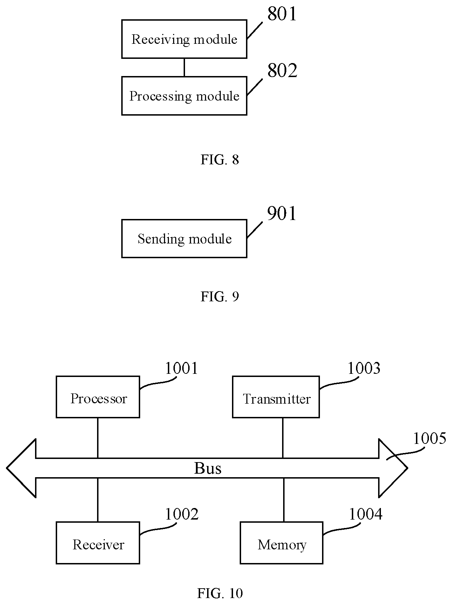

FIG. 8 shows a block diagram of a TCI state determination device provided by an example embodiment of the present disclosure. Referring to FIG. 8, the device includes:
a receiving module 801, configured to receive first DCI sent by a network device, where the first DCI is configured to indicate a transmission resource of a physical shared channel; and
a processing module 802, configured to determine at least one first TCI state corresponding to the physical shared channel.

In some embodiments, the processing module 802 is also configured to determine the at least one first TCI state based on the TCI state corresponding to the control resource set.

In some embodiments, the control resource set is a control resource set for sending the first DCI, or the control resource set is CORESET #0.

In some embodiments, the processing module 802 is also configured to:
In the case where the control resource set corresponds to one TCI state, the at least one first TCI state is the one TCI state corresponding to the control resource set;
   Or,
In the case where the control resource set corresponds to multiple TCI states, the at least one first TCI state is one TCI state in the multiple TCI states corresponding to the control resource set;
   Or,
In the case where the control resource set corresponds to multiple TCI states, the at least one first TCI state is the multiple TCI states corresponding to the control resource set.

In some embodiments, the receiving module 801 is also configured to receive first indication information sent by the network device. The first indication information is configured to indicate N TCI states. The TCI state includes at least one of a joint TCI state, an uplink TCI state, and a downlink TCI state. The TCI state corresponding to the control resource set is a subset of the N TCI states, and N is a positive integer.

In some embodiments, the N TCI states include multiple joint TCI states and/or downlink TCI states; the receiving module 801 is also configured to receive the second indication information sent by the network device.
The second indication information is configured to indicate at least one TCI state in the N TCI states corresponding to the control resource set;
   Or,
The second indication information is configured to indicate at least one TCI state in the N TCI states corresponding to the control resource set group corresponding to the control resource set.

In some embodiments, the second indication information is indicated by at least one of the RRC and the first MAC CE.

In some embodiments, the N TCI states include multiple joint TCI states and/or downlink TCI states; the processing module 802 is also configured to:
determine at least one TCI state of the N TCI states as the TCI state corresponding to the control resource set by default;
   or,
determine at least one TCI state of the N TCI states as the TCI state corresponding to the control resource set group corresponding to the control resource set.

In some embodiments, the receiving module 801 is also configured to receive the second MAC CE sent by the network device, and the second MAC CE is configured to indicate the TCI state corresponding to the control resource set.

In some embodiments, the receiving module 801 is further configured to receive third indication information sent by the network device. The third indication information is configured to indicate N TCI states, and the TCI states include at least one of the joint TCI state, the uplink TCI state and the downlink TCI state.

The processing module 802 is further configured to determine the at least one first TCI state based on the N TCI states.

In some embodiments, the processing module 802 is further configured to determine at least one TCI state among the N TCI states as the at least one first TCI state by default.

In some embodiments, the receiving module 801 is further configured to receive fourth indication information sent by the network device, and the fourth indication information is configured to indicate at least one TCI state among the N TCI states.

The processing module 802 is further configured to determine at least one TCI state among the N TCI states indicated by the fourth indication information as the at least one first TCI state.

In some embodiments, the fourth indication information is indicated by at least one of RRC, MAC CE and DCI.
In some embodiments, the fourth indication information is indicated by the DCI, and the DCI is DCI format 1_1 or DCI format 1_2;
   Or,
The DCI is DCI format 0_1 or DCI format 0_2.
In some embodiments, the N TCI states include a QCL indication for at least one of PDCCH, PDSCH, PUCCH, PUSCH, CSI-RS and SRS.
In some embodiments, the first indication information and/or the third indication information are carried in the third MAC CE, and the third MAC CE is configured to indicate the N TCI states; or,
The first indication information and/or the third indication information are carried in the fourth MAC CE and the second DCI. The fourth MAC CE is configured to indicate the N TCI states respectively corresponding to at least two code points in the transmission configuration indication TCI field of the second DCI, and the second DCI is configured to indicate one of the at least two code points.

In some embodiments, the first DCI is not configured to indicate the at least one first TCI state.

In some embodiments, the physical shared channel includes at least one of PDSCH and PUSCH.

In some embodiments, the physical shared channel is PDSCH, and the first DCI is DCI format 1_0; and/or,
the physical shared channel is PUSCH, and the first DCI is DCI format 0_0.

It should be noted that the device provided in the above embodiment, when implementing its functions, is only illustrated by the division of the above functional modules. In practical applications, the above functions can be assigned to different functional modules as needed. That is, the internal structure of the device is divided into different functional modules to complete all or part of the functions described above. In addition, the device provided in the above embodiment and the method embodiments belong to the same concept, and the specific implementation process is detailed in the method embodiments, which will not be repeated here.

FIG. 9 shows a block diagram of a TCI state determination device provided by an example embodiment of the present disclosure. Referring to FIG. 9, the device includes:
a sending module 901, configured to send first DCI to a terminal. The first DCI is configured to indicate a transmission resource of a physical shared channel, and the terminal is configured to determine at least one first TCI state corresponding to the physical shared channel.

In some embodiments, the at least one first TCI state is determined based on the TCI state corresponding to the control resource set.

In some embodiments, the control resource set is a control resource set for sending the first DCI, or the control resource set is CORESET #0.
In some embodiments, when the control resource set corresponds to one TCI state, the at least one first TCI state is the one TCI state corresponding to the control resource set;
   Or,
When the control resource set corresponds to multiple TCI states, the at least one first TCI state is one TCI state among the multiple TCI states corresponding to the control resource set;
   Or,
When the control resource set corresponds to multiple TCI states, the at least one first TCI state is the multiple TCI states corresponding to the control resource set.

In some embodiments, the sending module 901 is also configured to send first indication information to the terminal. The first indication information is configured to indicate N TCI states, and the TCI state includes at least one of a joint TCI state, an uplink TCI state, and a downlink TCI state. The TCI state corresponding to the control resource set is a subset of the N TCI states, and N is a positive integer.

In some embodiments, the N TCI states include multiple joint TCI states and/or downlink TCI states; the sending module 901 is also configured to send second indication information to the terminal.
The second indication information is configured to indicate at least one TCI state in the N TCI states corresponding to the control resource set;
   Or,
The second indication information is configured to indicate at least one TCI state in the N TCI states corresponding to the control resource set group corresponding to the control resource set.

In some embodiments, the second indication information is indicated by at least one of the RRC and the first MAC CE.

In some embodiments, the N TCI states include multiple joint TCI states and/or downlink TCI states;
The TCI state corresponding to the control resource set defaults to at least one TCI state among the N TCI states;
   Or,
The TCI state corresponding to the control resource set group corresponding to the control resource set defaults to at least one TCI state among the N TCI states.

In some embodiments, the sending module is also configured to send a second MAC CE to the terminal, and the second MAC CE is configured to indicate the TCI state corresponding to the control resource set.

In some embodiments, the sending module 901 is also configured to send third indication information to the terminal, and the third indication information is configured to indicate N TCI states, and the TCI state includes at least one of a joint TCI state, an uplink TCI state, and a downlink TCI state;

The at least one first TCI state is determined based on the N TCI states.

In some embodiments, the at least one first TCI state defaults to at least one TCI state among the N TCI states.

In some embodiments, the sending module 901 is further configured to send fourth indication information to the terminal, and the fourth indication information is configured to indicate at least one TCI state among the N TCI states;
The at least one first TCI state is at least one TCI state among the N TCI states indicated by the fourth indication information.

In some embodiments, the fourth indication information is indicated by at least one of RRC, MAC CE and DCI.
In some embodiments, the fourth indication information is indicated by the DCI, and the DCI is DCI format 1_1 or DCI format 1_2;
   Or,
The DCI is DCI format 0_1 or DCI format 0_2.

In some embodiments, the N TCI states include a QCL indication for at least one of PDCCH, PDSCH, PUCCH, PUSCH, CSI-RS and SRS.

In some embodiments, the first indication information and/or the third indication information are carried in the third MAC CE, and the third MAC CE is configured to indicate the N TCI states; or,
The first indication information and/or the third indication information are carried in the fourth MAC CE and the second DCI. The fourth MAC CE is configured to indicate the N TCI states respectively corresponding to at least two code points in the transmission configuration indication TCI field of the second DCI, and the second DCI is configured to indicate one code point of the at least two code points.

In some embodiments, the first DCI is not configured to indicate the at least one first TCI state.

In some embodiments, the physical shared channel includes at least one of PDSCH and PUSCH.

In some embodiments, the physical shared channel is PDSCH, and the first DCI is DCI format 1_0; and/or, the physical shared channel is PUSCH, and the first DCI is DCI format 0_0.

It should be noted that the device provided in the above embodiment, when implementing its functions, is only illustrated by the division of the above functional modules. In practical applications, the above functions can be assigned to different functional modules as needed. That is, the internal structure of the device is divided into different functional modules to complete all or part of the functions described above. In addition, the device provided in the above embodiment and the method embodiments belong to the same concept, and the specific implementation process is detailed in the method embodiments, which will not be repeated here.

FIG. 10 shows a structural schematic diagram of a communication device provided by an example embodiment of the present disclosure, and the communication device includes a processor 1001, a receiver 1002, a transmitter 1003, a memory 1004 and a bus 1005.

The processor 1001 includes one or more processing cores, and the processor 1001 executes various functional applications and information processing by running software programs and modules.

The receiver 1002 and the transmitter 1003 can be implemented as a communication component, which can be a communication chip.

The memory 1004 is connected to the processor 1001 via the bus 1005.

The memory 1004 can be configured to store at least one program code, and the processor 1001 is configured to execute the at least one program code to implement the various steps in the above method embodiments.

In addition, the communication device can be a terminal or a network device. The memory 1004 can be implemented by any type of volatile or non-volatile storage device or a combination thereof, and the volatile or non-volatile storage device includes but is not limited to: a magnetic disk or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an example embodiment, a computer-readable storage medium is also provided, in which an executable program code is stored, and the executable program code is loaded and executed by the processor to implement the TCI state determination method performed by the communication device provided in the above various method embodiments.

In an example embodiment, a chip is provided. The chip includes a programmable logic circuit and/or a program instruction, and when the chip is run on a terminal or a network device, it is configured to implement the TCI state determination method provided in each method embodiment.

In an example embodiment, a communication system is provided. The communication system includes a terminal and a network device. The terminal is configured to implement the TCI state determination method as described above, and the network device is configured to implement the TCI state determination method as described above.

In an example embodiment, a computer program product is provided, and when the computer program product is executed by a processor of a terminal or a network device, it is configured to implement the TCI state determination method provided by the above-mentioned various method embodiments.

Those skilled in the art can understand that all or part of the steps of implementing the above-mentioned embodiments can be completed by hardware, or can be completed by instructing the relevant hardware through a program, and the program can be stored in a computer-readable storage medium, and the above-mentioned storage medium can be a read-only memory, a disk or an optical disk, etc.

The above description is only an optional embodiment of the present disclosure, and is not intended to limit the present disclosure. Any modification, equivalent replacement, improvement, etc. made within the spirit and principle of the present disclosure shall be included in the protection scope of the present disclosure.

## Claims

1. A method for determining a TCI state, performed by a terminal, comprising:
receiving first downlink control information DCI sent by a network device, wherein the first DCI is configured to indicate a transmission resource of a physical shared channel; and
determining at least one first TCI state corresponding to the physical shared channel.

2. The method according to claim 1, wherein determining the at least one first TCI state corresponding to the physical shared channel comprises:
determining the at least one first TCI state based on one or more TCI states corresponding to a control resource set.

3. The method according to claim 2, wherein the control resource set is a control resource set for sending the first DCI, or the control resource set is CORESET #0.

4. The method according to claim 2, wherein determining the at least one first TCI state based on the one or more TCI states corresponding to the control resource set comprises:
in a case where the control resource set corresponds to one TCI state, the at least one first TCI state is the one TCI state corresponding to the control resource set; or
in a case where the control resource set corresponds to multiple TCI states, the at least one first TCI state is one TCI state among the multiple TCI states corresponding to the control resource set; or
in a case where the control resource set corresponds to multiple TCI states, the at least one first TCI state is the multiple TCI states corresponding to the control resource set.

5. The method according to claim 2, further comprising:
receiving first indication information sent by the network device, wherein the first indication information is configured to indicate N TCI states, the TCI state comprises at least one of a joint TCI state, an uplink TCI state, and a downlink TCI state, the one or more TCI states corresponding to the control resource set are a subset of the N TCI states, and N is a positive integer.

6. The method according to claim 5, wherein the N TCI states comprise multiple joint TCI states and/or downlink TCI states; and the method further comprises:
receiving second indication information sent by the network device;
the second indication information is configured to indicate at least one TCI state among the N TCI states corresponding to the control resource set; or
the second indication information is configured to indicate at least one TCI state among the N TCI states corresponding to a control resource set group corresponding to the control resource set.

7. The method according to claim 6, wherein the second indication information is indicated by at least one of a RRC and a first media access control control element MAC CE.

8. The method according to claim 5, wherein the N TCI states comprise multiple joint TCI states and/or downlink TCI states; and the method further comprises:
determining at least one TCI state among the N TCI states as the one or more TCI states corresponding to the control resource set by default; or
determining at least one TCI state among the N TCI states as the one or more TCI states corresponding to a control resource set group corresponding to the control resource set.

9. The method according to claim 2, further comprising:
receiving a second MAC CE sent by the network device, wherein the second MAC CE is configured to indicate the one or more TCI states corresponding to the control resource set.

10. The method according to claim 1, further comprising:
receiving third indication information sent by the network device, wherein the third indication information is configured to indicate N TCI states, and the TCI state comprises at least one of a joint TCI state, an uplink TCI state, and a downlink TCI state;
determining the at least one first TCI state corresponding to the physical shared channel comprises:
determining the at least one first TCI state based on the N TCI states.

11. The method according to claim 10, wherein determining the at least one first TCI state based on the N TCI states comprises:
determining at least one TCI state among the N TCI states as the at least one first TCI state by default.

12. The method according to claim 10, further comprising:
receiving fourth indication information sent by the network device, wherein the fourth indication information is configured to indicate at least one TCI state among the N TCI states;
determining the at least one first TCI state based on the N TCI states comprises:
determining at least one TCI state among the N TCI states indicated by the fourth indication information as the at least one first TCI state.

13. The method according to claim 12, wherein the fourth indication information is indicated by at least one of RRC, MAC CE and DCI.

14. The method according to claim 13, wherein the fourth indication information is indicated by the DCI;
the DCI is DCI format 1_1 or DCI format 1_2; or
the DCI is DCI format 0_1 or DCI format 0_2.

15. The method according to claim 5 or 10, wherein the N TCI states comprise a quasi-co-located QCL indication for at least one of a physical downlink control channel PDCCH, a physical downlink shared channel PDSCH, a physical uplink control channel PUCCH, a physical uplink shared channel PUSCH, a channel state information reference signal CSI-RS, and a sounding reference signal SRS.

16. The method according to claim 5 or 10, wherein
the first indication information and/or the third indication information are carried in a third MAC CE, and the third MAC CE is configured to indicate the N TCI states; or,
the first indication information and/or the third indication information are carried in a fourth MAC CE and second DCI, and the fourth MAC CE is configured to indicate N TCI states respectively corresponding to at least two code points in a transmission configuration indication TCI field of the second DCI, and the second DCI is configured to indicate one of the at least two code points.

17. The method according to any one of claims 1 to 16, wherein the first DCI is not configured to indicate the at least one first TCI state.

18. The method according to any one of claims 1 to 17, wherein the physical shared channel comprises at least one of PDSCH and PUSCH.

19. The method according to claim 18, wherein the physical shared channel is PDSCH, and the first DCI is DCI format 1_0; and/or,
the physical shared channel is PUSCH, and the first DCI is DCI format 0_0.

20. A method for determining a TCI state, performed by a network device, comprising:
sending first DCI to a terminal, wherein the first DCI is configured to indicate a transmission resource of a physical shared channel, and the terminal is configured to determine at least one first TCI state corresponding to the physical shared channel.

21. The method according to claim 20, wherein the at least one first TCI state is determined based on one or more TCI states corresponding to a control resource set.

22. The method according to claim 21, wherein the control resource set is a control resource set for sending the first DCI, or the control resource set is CORESET #0.

23. The method according to claim 21, wherein
in a case where the control resource set corresponds to one TCI state, the at least one first TCI state is the one TCI state corresponding to the control resource set; or
in a case where the control resource set corresponds to multiple TCI states, the at least one first TCI state is one TCI state among the multiple TCI states corresponding to the control resource set; or
in a case where the control resource set corresponds to multiple TCI states, the at least one first TCI state is the multiple TCI states corresponding to the control resource set.

24. The method according to claim 21, further comprising:
sending first indication information to the terminal, wherein the first indication information is configured to indicate N TCI states, the TCI state comprises at least one of a joint TCI state, an uplink TCI state and a downlink TCI state, the one or more TCI states corresponding to the control resource set are a subset of the N TCI states, and N is a positive integer.

25. The method according to claim 24, wherein the N TCI states comprise multiple joint TCI states and/or downlink TCI states; and the method further comprises:
sending second indication information to the terminal;
the second indication information is configured to indicate at least one TCI state of the N TCI states corresponding to the control resource set; or
the second indication information is configured to indicate at least one TCI state of the N TCI states corresponding to a control resource set group corresponding to the control resource set.

26. The method according to claim 25, wherein the second indication information is indicated by at least one of a RRC and a first MAC CE.

27. The method according to claim 24, wherein the N TCI states comprise multiple joint TCI states and/or downlink TCI states;
the one or more TCI states corresponding to the control resource set defaults to at least one TCI state of the N TCI states; or
one or more TCI states corresponding to a control resource set group corresponding to the control resource set defaults to at least one TCI state of the N TCI states.

28. The method according to claim 21, further comprising:
sending a second MAC CE to the terminal, wherein the second MAC CE is configured to indicate the one or more TCI states corresponding to the control resource set.

29. The method according to claim 20, further comprising:
sending third indication information to the terminal, wherein the third indication information is configured to indicate N TCI states, the TCI state comprises at least one of a joint TCI state, an uplink TCI state and a downlink TCI state;
the at least one first TCI state is determined based on the N TCI states.

30. The method according to claim 29, wherein
the at least one first TCI state defaults to at least one TCI state of the N TCI states.

31. The method according to claim 29, further comprising:
sending fourth indication information to the terminal, wherein the fourth indication information is configured to indicate at least one TCI state among the N TCI states;
the at least one first TCI state is at least one TCI state among the N TCI states indicated by the fourth indication information.

32. The method according to claim 31, wherein the fourth indication information is indicated by at least one of RRC, MAC CE and DCI.

33. The method according to claim 32, wherein the fourth indication information is indicated by the DCI;
the DCI is DCI format 1_1 or DCI format 1_2; or
the DCI is DCI format 0_1 or DCI format 0_2.

34. The method according to claim 24 or 29, wherein the N TCI states comprise a quasi-co-located QCL indication for at least one of a physical downlink control channel PDCCH, a physical downlink shared channel PDSCH, a physical uplink control channel PUCCH, a physical uplink shared channel PUSCH, a channel state information reference signal CSI-RS, and a sounding reference signal SRS.

35. The method according to claim 24 or 29, wherein
the first indication information and/or the third indication information are carried in a third MAC CE, and the third MAC CE is configured to indicate the N TCI states; or
the first indication information and/or the third indication information are carried in a fourth MAC CE and second DCI, and the fourth MAC CE is configured to indicate N TCI states respectively corresponding to at least two code points in a transmission configuration indication TCI field of the second DCI, and the second DCI is configured to indicate one of the at least two code points.

36. The method according to any one of claims 20 to 35, wherein the first DCI is not configured to indicate the at least one first TCI state.

37. The method according to any one of claims 20 to 36, wherein the physical shared channel comprises at least one of PDSCH and PUSCH.

38. The method according to claim 37, wherein the physical shared channel is PDSCH, and the first DCI is DCI format 1_0; and/or,
the physical shared channel is PUSCH, and the first DCI is DCI format 0_0.

39. A device for determining a TCI state, comprising:
a receiving module, configured to receive first downlink control information DCI sent by a network device, wherein the first DCI is configured to indicate a transmission resource of a physical shared channel; and
a determining module, configured to determine at least one first TCI state corresponding to the physical shared channel.

40. A device for determining a TCI state, comprising:
a sending module, configured to send first DCI to a terminal, wherein the first DCI is configured to indicate a transmission resource of a physical shared channel, and the terminal is configured to determine at least one first TCI state corresponding to the physical shared channel.

41. A terminal, comprising:
a processor; and
a transceiver connected to the processor;
wherein, the processor is configured to load and execute executable instructions to implement the method for determining the TCI state according to any one of claims 1 to 19.

42. A network device, comprising:
a processor; and
a transceiver connected to the processor;
wherein, the processor is configured to load and execute executable instructions to implement the method for determining the TCI state according to any one of claims 20 to 38.

43. A communication system, wherein the communication system comprises a terminal and a network device, the terminal is configured to implement the method for determining the TCI state according to any one of claims 1 to 19, and the network device is configured to implement the method for determining the TCI state according to any one of claims 20 to 38.

44. A computer-readable storage medium, wherein the readable storage medium stores an executable program code, and the executable program code is loaded and executed by the processor to implement the method for determining the TCI state according to any one of claims 1 to 38.
